(19) Europäisches Patentamt
European Patent Office
Office européen des brevets

(11) **EP 2 953 235 B1**

(12) **EUROPEAN PATENT SPECIFICATION**

(45) Date of publication and mention
of the grant of the patent:
**12.09.2018 Bulletin 2018/37**

(21) Application number: **13873369.6**

(22) Date of filing: **29.01.2013**

(51) Int Cl.:
*H02J 50/40* (2016.01)        *H02J 50/12* (2016.01)
*H02J 5/00* (2016.01)         *H04B 5/00* (2006.01)
*H02J 7/02* (2016.01)         *H02J 50/05* (2016.01)

(86) International application number:
**PCT/JP2013/051916**

(87) International publication number:
**WO 2014/118895 (07.08.2014 Gazette 2014/32)**

(54) **WIRELESS POWER TRANSFER SYSTEM, POWER RECEIVER, AND WIRELESS POWER TRANSFER METHOD**

DRAHTLOSES STROMÜBERTRAGUNGSSYSTEM, STROMEMPFÄNGER UND DRAHTLOSES STROMÜBERTRAGUNGSVERFAHREN

SYSTÈME ET PROCÉDÉ DE TRANSFERT DE PUISSANCE SANS FIL ET RÉCEPTEUR DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.12.2015 Bulletin 2015/50**

(73) Proprietor: **FUJITSU LIMITED**
**Kawasaki-shi**
**Kanagawa 211-8588 (JP)**

(72) Inventors:
• **SHIMOKAWA, Satoshi**
  **Kawasaki-shi**
  **Kanagawa 211-8588 (JP)**
• **UCHIDA, Akiyoshi**
  **Kawasaki-shi**
  **Kanagawa 211-8588 (JP)**

(74) Representative: **Haseltine Lake LLP**
**Lincoln House, 5th Floor**
**300 High Holborn**
**London WC1V 7JH (GB)**

(56) References cited:
EP-A1- 2 536 002          WO-A1-2012/164845
JP-A- 2012 005 207        JP-A- 2012 105 478
JP-A- 2013 017 257        US-A1- 2011 161 689
US-A1- 2012 235 508

**Description**

TECHNICAL FIELD

Embodiments discussed herein relate to a wireless power transfer system, a power receiver and a wireless power transfer method.

BACKGROUND ART

Recently, wireless power transfer techniques for power supply and electrification have attracted attention. Research and development have been conducted on wireless power transfer systems wirelessly transferring power to, e.g., various electronic devices such as mobile terminals and notebook computers, electrical household appliances or power infrastructure equipment.

Generally, techniques using electromagnetic induction, and techniques using radio waves are known as this kind of wireless power transmission (wireless power transfer). On the other hand, recently, there have been expectations for power transfer techniques using magnetic field resonance and electric field resonance as techniques being capable of transferring power to a plurality of power receivers while placing each power receiver at a certain distance from a power source, or to various three-dimensional positions of each power receiver.

Conventionally, various wireless power transfer techniques using magnetic field resonance have been proposed.

PRIOR ART DOCUMENTS

PATENT DOCUMENTS

Patent Document 1: International Publication Pamphlet No. WO2011/099071
Patent Document 2: Japanese Laid-open Patent Publication No. 2010-148174
Patent Document 3: US 2012/235508 discloses a non-contact power transmission system comprising: a primary coil including a power supply coil and a magnetic resonance coil; and a secondary coil including a load coil, thereby transmitting an electric power from the power supply coil at a self-resonating frequency of the magnetic resonance coil, which is determined by a parasitic capacitance between wound wires of the coil and a self-inductance of the coil, and taking out the electric power supplied, from the load coil of the secondary coil through magnetic coupling, with non-contact, wherein the electric power is transmitted, with non-contact, with applying magnetic coupling in coupling between the power supply coil and the magnetic resonance coil and coupling between the magnetic resonance coil and the load coil.
Patent Document 4: EP2536002 discloses that the phase of a voltage supplied to a power transmitting coil and the phase of a current that flows in the power transmitting coil or a power receiving coil is detected and the resonant frequency of the power transmitting coil or the power receiving coil is varied such that the phase difference between them becomes a target value. The power transmitting coil has a power supplying coil to which an alternating-current power supply is connected and a power transmitting resonant coil electromagnetically coupled with the power supplying coil closely, and the power receiving coil resonant coil and a power drawing coil electromagnetically coupled with the power receiving resonant coil closely. Control is performed such that the phase difference between the voltage of the alternating-current power supply and the current of the power transmitting resonant coil becomes a target value, and the phase difference between the voltage of the alternating-current power supply and the current of the power receiving resonant coil becomes a target value.

SUMMARY OF THE INVENTION

PROBLEM TO BE SOLVED BY THE INVENTION

As described above, conventionally, wireless power transfer techniques for wirelessly transferring power for power supply and electrification have been widely used. However, e.g., when there is a difference in resonance frequency between a power source and a power receiver, transfer efficiency is degraded. Thus, real-time phase control may be important so as to prevent degradation of the transfer efficiency.

However, the resonance frequency in the wireless power transfer system is, e.g., from hundreds of KHz to tens of MHz. Thus, in order to perform real-time phase control, dedicated communication circuits are provided to the power source and the power receiver, respectively. Accordingly, hardware volume on each of the power source and the power receiver increases. Thus, cost increases.

MEANS FOR SOLVING THE PROBLEM

According to an aspect of the invention, there is provided a power receiver according to claim 1.
According to another aspect of the invention, there is provided a wireless power transfer system according to claim 8.
According to another aspect of the invention, there is provided a wireless power transfer method according to claim 14.

EFFECT OF THE INVENTION

The wireless power transfer system, the power receiver and the wireless power transfer method disclosed have an advantageous effect in that the power transfer efficiency may be enhanced while suppressing increase in the hardware volume and cost.

BRIEF DESCRIPTION OF DRAWINGS

[FIG. 1] FIG. 1 is a diagram schematically depicting a wireless power transfer system.
[FIG. 2] FIG. 2 is a block diagram depicting one example of a wireless power transfer system.
[FIG. 3] FIG. 3 is a block diagram depicting the wireless power transfer system depicted in FIG. 2 while focusing on a control system.
[FIG. 4A] FIG. 4A is a diagram (1) for illustrating resonance frequency control in the wireless power transfer system depicted in FIG. 2 and FIG. 3.
[FIG. 4B] FIG. 4B is a diagram (2) for illustrating resonance frequency control in the wireless power transfer system depicted in FIG. 2 and FIG. 3.
[FIG. 5A] FIG. 5A is a diagram (1) for illustrating conditions for simulation in the wireless power transfer system depicted in FIG. 2 and FIG. 3.
[FIG. 5B] FIG. 5B is a diagram (2) for illustrating conditions for simulation in the wireless power transfer system depicted in FIG. 2 and FIG. 3.
[FIG. 6A] FIG. 6A is a diagram (1) depicting a result of simulation in the wireless power transfer system depicted in FIG. 2 and FIG. 3, which is performed under the conditions for simulation illustrated in FIG. 5A and FIG. 5B.
[FIG. 6B] FIG. 6B is a diagram (2) depicting a result of simulation in the wireless power transfer system depicted in FIG. 2 and FIG. 3, which is performed under the conditions for simulation illustrated in FIG. 5A and FIG. 5B.
[FIG. 7] FIG. 7 is a block diagram depicting a wireless power transfer system according to a first embodiment.
[FIG. 8] FIG. 8 is a block diagram depicting a wireless power transfer system according to a second embodiment.
[FIG. 9] FIG. 9 is a diagram (1) for illustrating an operation of the wireless power transfer system depicted in FIG. 8.
[FIG. 10] FIG. 10 is a diagram (2) for illustrating an operation of the wireless power transfer system depicted in FIG. 8.
[FIG. 11] FIG. 11 is a diagram (3) for illustrating an operation of the wireless power transfer system depicted in FIG. 8.
[FIG. 12] FIG. 12 is a diagram (4) for illustrating an operation of the wireless power transfer system depicted in FIG. 8.
[FIG. 13] FIG. 13 is a block diagram depicting a wireless power transfer system according to a third embodiment.
[FIG. 14] FIG. 14 is a diagram (1) for illustrating an operation of the wireless power transfer system depicted in FIG. 13.
[FIG. 15] FIG. 15 is a diagram (2) for illustrating an operation of the wireless power transfer system depicted in FIG. 13.

MODES FOR CARRYING OUT THE INVENTION

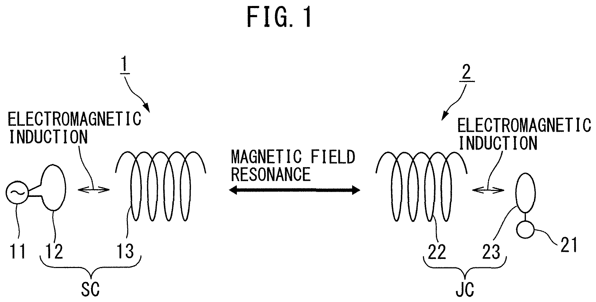

First, before describing embodiments of the wireless power transmission (wireless power transfer) system, the power receiver, and the wireless power transfer method in detail, an example of the wireless power transfer system and problems thereof are described with reference to FIG. 1 to FIG. 6B.
FIG. 1 is a diagram schematically depicting a wireless power transfer system. As depicted in FIG. 1, the wireless power transfer system has a primary side (power source side: a power source) 1 and a secondary side (power receiver side: a power receiver) 2. The power source 1 and the power receiver 2 may be plural.
The power source 1 includes an AC power supply 11, and a Power source system coil SC including a power supply coil 12 and a power source resonance coil 13. The power receiver 2 includes a Power receiver system coil JC including a power receiver resonance coil 22 and a power extraction coil 23, and a load device 21.

As depicted in FIG. 1, the power source 1 and the power receiver 2 transfer energy (electric-power) from the power source 1 to the power receiver 2 by magnetic field resonance (magnetic field resonating) between the power source resonance coil (LC resonator) 13 and the power receiver resonance coil (LC resonator) 22. The transfer of power from the LC resonator 13 to the LC resonator 22 may be performed using electric field resonance (electric field resonating) or the like. However, in the following description, the case of using the magnetic field resonance will mainly be described as an example.

In the Power source system coil SC, the power transfer from the power supply coil 12 to the power source resonance coil 13 is performed using electromagnetic induction. In the Power receiver system coil JC, the power transfer from the power receiver resonance coil 22 to the power extraction coil 23 is also performed using electromagnetic induction.

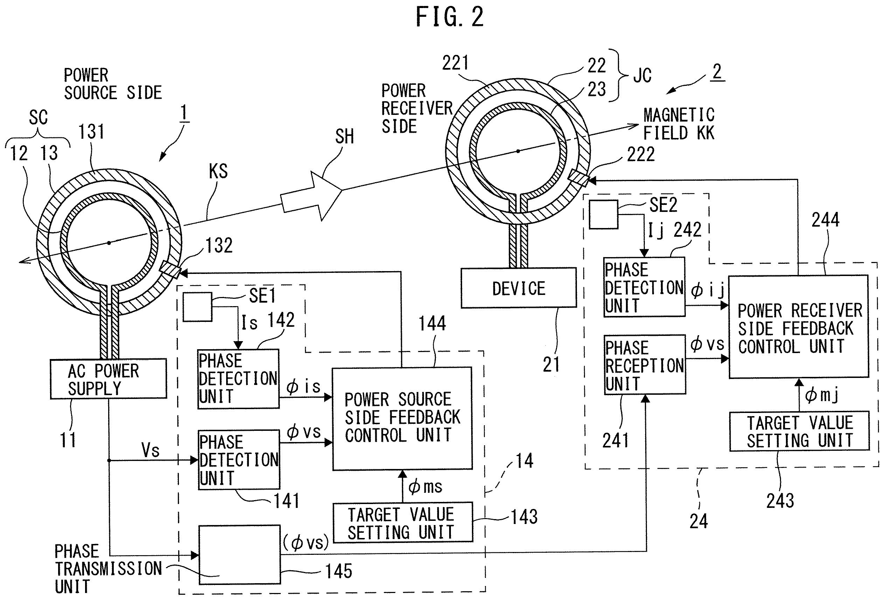

FIG. 2 is a block diagram depicting an example of the wireless power transfer system and illustrates in more detail the wire power transfer system depicted in FIG. 1. As depicted in FIG. 2, the power transfer system includes the Power source system coil SC, the Power receiver system coil JC, the AC power supply 11, a power source side control circuit 14, the device 21 serving as a load, and a power receiver side control circuit 24.

As described above, the Power source system coil SC includes the power supply coil 12 and the power source resonance coil 13. The power supply coil 12 is windings obtained by circumferentially winding a metal wire, e.g., a copper wire or an aluminum wire a plurality of times. An AC voltage (high-frequency voltage) generated by the AC power supply 11 is applied to both ends thereof.

The power source resonance coil 13 includes a coil 131 obtained by circumferentially winding a metal wire, e.g., a copper wire or an aluminum wire, and a capacitor 132 connected to both ends of the coil 131 so as to form a resonance circuit configured by this coil and this capacitor. A resonance frequency $f_0$ is expressed by the following expression.

$$f_0 = 1/\{2\pi(LC)^{1/2}\} \qquad \ldots\ldots \; (1)$$

where L is the inductance of the coil 131, and C is the capacitance of the capacitor 132.

The coil 131 of the power source resonance coil 13 is, e.g., a one-turn coil. Various types of capacitors may be used as the capacitor 132. However, a capacitor with a minimized loss and a sufficient pressure resistance is preferable.

In the wireless power transfer system depicted in FIG. 2, in order to make the resonance frequency variable, a variable capacitor is used as the capacitor 132. For example, a variable capacity device manufactured using MEMS technology, and a variable capacity device (varactor) using a semiconductor may be applied to the variable capacitor.

The power supply coil 12 and the power source resonance coil 13 are arranged to be coupled electromagnetically and closely to each other. For example, these coils are concentrically arranged on a same plane. In other words, these coils are arranged in a state in which the power supply coil 12 is provided inside the power source resonance coil 13. Alternatively, the power source resonance coil 13 and the power supply coil 12 may be coaxially arranged with an appropriate distance from each other.

When an AC voltage is applied from the AC power supply 11 to the power supply coil 12 in this state, a resonance current flows in the power source resonance coil 13 by electromagnetic induction due to an alternating magnetic field generated in the power supply coil 12. In other words, electric power is transferred from the power supply coil 12 to the power source resonance coil 13 by electromagnetic induction.

The Power receiver system coil JC includes the power receiver resonance coil 22 and the power extraction coil 23. The power receiver resonance coil 22 includes a coil 221 formed by winding a metal wire such as a copper wire or an aluminum wire circumferentially, and a capacitor 222 connected to both ends of the coil 221. The resonance frequency $f_0$ of the power receiver resonance coil 22 is expressed by the above expression (1) according to the inductance of the coil 221 and the capacity of the capacitor 222.

The coil 221 of the power receiver resonance coil 22 is, e.g., a one-turn coil. Various types of capacitors may be applied to the capacitor 222, as described above. In this wireless power transfer system depicted in FIG. 2, in order to make the resonance frequency variable, a variable capacitor is used as the capacitor 222.

Similarly to the capacitor 132, a variable capacity device manufactured using, e.g., MEMS technology, or a varactor may be applied to the variable capacitor.

The power extraction coil 23 is a winding obtained by circumferentially winding a metal wire, e.g., a copper wire or an aluminum wire a plurality of times. The device 21 serving as a load is connected to both ends of the coil 23. The load device 21 is, e.g., a battery used as a power supply for the power receiver 2 or a circuit for charging the battery.

The power receiver resonance coil 22 and the power extraction coil 23 are arranged to be coupled electromagnetically and closely to each other. For example, these coils are concentrically arranged on a same plane. In other words, these coils are arranged in a state in which the power extraction coil 23 is provided inside the power receiver resonance coil 22. Alternatively, the power receiver resonance coil 22 and the power extraction coil 23 may be coaxially arranged with an appropriate distance from each other.

When a resonance current flows in the power receiver resonance coil 22 in this state, a current flows in the power extraction coil 23 by electromagnetic induction due to an alternating magnetic field generated by the resonance current. In other words, electric power is transferred from the power receiver resonance coil 22 to the power extraction coil 23 by electromagnetic induction.

Electric power is wirelessly transferred by the magnetic field resonance from the Power source system coil SC to the Power receiver system coil JC. Thus, as depicted in FIG. 2, the Power source system coil SC and the Power receiver system coil JC are arranged within a range of an appropriate distance from each other such that the coil planes of these coils are parallel to each other and that the coil axis centers of these coils coincide with each other or are not largely shifted from each other.

As depicted in FIG. 2, in a power transfer system, a direction along the coil axis center KS is a main radiation direction of a magnetic field KK, and a direction from the Power source system coil SC to the Power receiver system coil JC is a power transmitting direction SH.

When both of the resonance frequency $f_s$ of the power source resonance coil 13 and the resonance frequency fj of the power receiver resonance coil 22 coincide with the frequency fd of the AC power supply 11, the maximum power is transferred.

However, if these resonance frequencies fs and fj are shifted from each other, or deviate from the frequency fd of the AC power supply 11, the transferred power decreases, and the efficiency of power transfer decreases.

Therefore, in the power transfer system depicted in FIG. 2, resonance frequency control is performed by the power source side control circuit 14 and the power receiver side control circuit 24, using the phase $\phi$vs of the AC power supply 11 and the phases $\phi$is and $\phi$ij of currents respectively flowing in the power source resonance coil 13 and the power receiver resonance coil 22.

The power source side control circuit 14 detects the phase $\phi_{vs}$ of the voltage $V_s$ applied to the Power source system coil SC and the phase $\phi$is of the current Is flowing in the Power source system coil SC, and performs variable control of the resonance frequency $f_s$ of the Power source system coil SC such that the phase difference $\triangle\phi$s therebetween becomes a predetermined target value $\phi$ms.

In other words, the power source side control circuit 14 has a current detection sensor SE1, a phase detection units 141, 142, a target value setting unit 143, a power source side feedback control unit 144, and a phase transmission unit 145.

The current detection sensor SE1 detects the current Is flowing in the power source resonance coil 13. For example, a hall effect element, a magnetic resistance element or a detection coil or the like may be used as the current detection sensor SE1. The current detection sensor SE1 outputs a voltage signal according to, e.g., the waveform of the current $I_s$.

The phase detection unit 141 detects the phase $\phi$vs of the voltage Vs applied to the power supply coil 12, and outputs a voltage signal according to, e.g., the waveform of the voltage Vs. The phase detection unit 141 may output the voltage Vs without any changes, or by dividing the voltage Vs by an appropriate resistor. Thus, the phase detection unit 141 may be configured by a simple electric wire, or by one or more resistor elements.

The phase detection unit 142 detects the phase $\phi$is of a current Is flowing in the power source resonance coil 13, based on an output from the current detection sensor SE1, and outputs a voltage signal according to, e.g., the waveform of the current Is. The phase detection unit 142 may output the output of the current detection sensor SE1 without any change. Thus, the current detection sensor SE1 may serve also as the phase detection unit 142.

The target value setting unit 143 sets and stores the target value $\phi$ms of the phase difference $\triangle\phi$s. Therefore, a memory for storing the target value $\phi$ms is provided in the target value setting unit 143. For example, "-180° (-$\pi$ radians)" or "a value obtained by adding an appropriate correction value a to -180°" is set as the target value $\phi$ms.

The target value $\phi$ms may be set by selecting from one or more data preliminarily stored, or may be set according to a command from a CPU, a keyboard, or the like.

The power source side feedback control unit 144 performs variable control of the resonance frequency fs of the power source resonance coil 13 such that the phase difference $\triangle\phi$s between the phase $\phi$vs of the voltage $V_s$ of the AC power supply 11 and the phase $\phi$is of the current Is of the power source resonance coil 13 is the set target value $\phi$ms.

The phase transmission unit 145 wirelessly transmits information concerning the phase $\phi$vs of the voltage Vs supplied to the power supply coil 12 to the power receiver side control circuit 24 as an analog signal or a digital signal. The phase transmission unit 145 may transmit a signal obtained by, e.g., multiplying a voltage signal set according to the waveform of the voltage Vs by an integer in order to improve an S/N ratio.

The power receiver side control circuit 24 detects the phase $\phi$vs of the voltage VS supplied to the Power source system coil SC and the phase $\phi$ij of the current IJ flowing in the Power receiver system coil JC, and performs variable control of the resonance frequency fj of the Power receiver system coil JC such that the phase difference $\triangle\phi$j therebetween is a predetermined target value $\phi$mj.

The power source side control circuit 24, a current detection sensor SE2, a phase reception unit 241, a phase detection unit 242, a target value setting unit 243, and a power receiver side feedback control unit 244.

The current detection sensor SE2 detects the current lj flowing in the power receiver resonance coil 22. For example, a Hall device, a magnetic resistance element, or a detection coil or the like may be used as the current detection sensor SE2. The current detection sensor SE2 outputs a voltage signal according to, e.g., the waveform of the current lj.

The phase reception unit 241 receives and outputs information concerning the phase $\phi vs$ transmitted from the phase transmission unit 145. If the voltage signal is multiplied at the phase transmission unit 145, frequency division is performed to demultiply the voltage signal at the phase reception unit 241. The phase reception unit 241 outputs a voltage signal according to, e.g., the voltage Vs.

The phase detection unit 242 detects the phase $\phi ij$ of the current lj flowing in the power receiver resonance coil 22, based on the output from the current detection sensor SE2. The phase detection unit 242 outputs a voltage signal according to, e.g., the waveform of the current lj. The phase detection unit 242 may output the output of the current detection sensor SE2 without any change. Thus, the current detection sensor SE2 may be configured to act also as the phase detection unit 242.

The target value setting unit 243 sets and stores the target value $\phi mj$ of the phase difference $\Delta\phi j$. Thus, a memory for storing the target value $\phi mj$ is provided in the target value setting unit 243. A value obtained by adding "-90° (-$\pi/2$ radians)" to the target value $\phi ms$ in the power source side control circuit 14 is set as the target value $\phi mj$.

In other words, e.g., "-270° (-$3\pi/2$ radians)" or "a value obtained by adding an appropriate value a to -270°", or the like is set as the target value $\phi mj$. A method for setting the target value $\phi mj$, and the like are similar to those used when setting the target value $\phi ms$.

The power receiver side feedback control unit 244 performs variable control of the resonance frequency fj of the power receiver resonance coil 22 such that the phase difference $\Delta\phi j$ between the phase $\phi vs$ of the voltage Vs of the AC power supply 11 and the phase $\phi ij$ of the current lj of the power receiver resonance coil 22 is the target value $\phi mj$.

The respective of the target value setting unit 143 and the power source side feedback control unit 144 in the power source side control circuit 14, and the target value setting unit 243 and the power receiver side feedback control unit 244 in the power receiver side control circuit 24 are simple examples of the resonance frequency control unit.

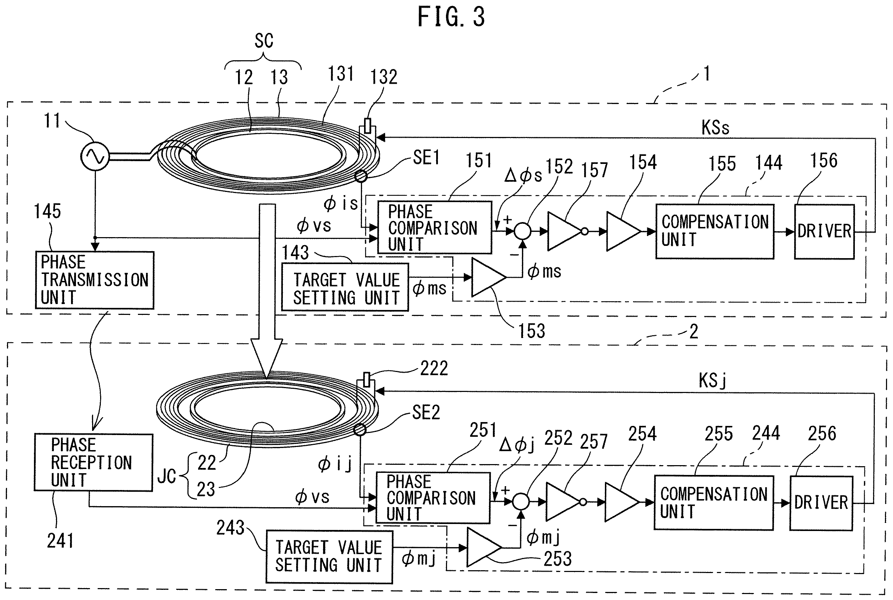

FIG. 3 is a block diagram depicting the wireless power transfer system depicted in FIG. 2 while focusing on a control system. FIG. 3 illustrates in detail the power source side feedback control unit 144 of the power source 1 and the power receiver side feedback control unit 244 of the power receiver 2.

In the block diagram depicted as FIG. 3, for simplification, the phase detection units 141, 142, 241, and 242 depicted in FIG. 2 are omitted. In other words, in FIG. 3, the phase $\phi is$ of the current Is flowing from the current detection sensor SE1 to the power source resonance coil 13 is directly output. However, the phase $\phi is$ may be output via, e.g., the phase detection unit 142 provided in the power source side feedback control unit 144.

As depicted in FIG. 3, the power source side feedback control unit 144 has a phase comparison unit 151, an addition unit 152, gain adjustment units 153, 154, a compensation unit 155, a driver 156, a polarity inversion unit 157, and the like.

The phase comparison unit 151 compares the $\phi is$ of the current Is detected by the current detection sensor SE1 and the phase $\phi vs$ of the voltage Vs of the AC power supply 11, and outputs the phase difference $\Delta\phi s$ therebetween.

The addition unit 152 subtracts (inverts and adds) the target value $\phi ms$ set by the target value setting unit 143 from the phase difference $\Delta\phi s$ output by the phase comparison unit 151. Accordingly, when the phase difference $\Delta\phi s$ and the target value $\phi ms$ are matched, an output of the addition unit 152 is 0.

The output of the addition unit 152 is inverted in polarity by the polarity inversion unit 157, and next input to the gain adjustment unit 154, and then input to the compensation unit 155. The gain adjustment units 153 and 154 adjust a gain (amplification) corresponding to an input value or data, or convert data or the like such that control is correctly performed.

The compensation unit 155 determines a gain corresponding to, e.g., a low frequency component. In other words, the power source side feedback control unit 144 may be regarded as a servo system performing feedback control on, e.g., an MEMS variable capacity device which is a capacitor 132.

Thus, an appropriate servo filter for stabilization, speeding-up, and improvement in accuracy of the servo system may be used as the compensation unit 155. In addition, a filter circuit or a differentiation/integration circuit or the like for performing a PID (Proportional Integral Derivative Controller) operation in such a servo system is appropriately used.

The driver 156 outputs a control signal KSs to, e.g., an MEMS variable capacity device which is a capacitor 132, and performs variable control of the capacitance of the MEMS variable capacity device.

The MEMS variable capacity device (MEMS variable capacitor) is configured to change electrostatic capacitance by providing, e.g., a lower electrode and an upper electrode on a glass substrate, and using change of a space due to flexure caused by an electrostatic attraction force which is generated by a voltage applied between the electrodes.

The MEMS variable capacity device (capacitor 132) may be configured such that an electrode for the capacitor, and an electrode for driving may be provided separately from each other. The relationship between a voltage applied to the electrode for driving and an amount of the capacitance change is not linear. Thus, a calculation for the conversion, or table conversion is performed appropriately in, e.g., the driver 156.

The power receiver side feedback control unit 244 includes a phase comparison unit 251, an addition unit 252, gain adjustment units 253, 254, a compensation unit 255, a driver 256, and a polarity inversion unit 257.

An operation of each unit of the power receiver side feedback control unit 244 is similar to that of each unit of the power source side feedback control unit 144. Therefore, description of the operation of each unit of the power receiver side feedback control unit 244 is omitted.

The power source side control circuit 14 and the power receiver side control circuit 24 depicted in FIG. 2, and the power source side feedback control unit 144 and the power receiver side feedback control unit 244 depicted in FIG. 3, and the like may be implemented by software, or hardware, or a combination thereof.

Such control circuits and control units may be implemented using a computer including, e.g., a CPU, memories such as a ROM and a RAM, and other peripheral devices, and causing the CPU to execute appropriate computer programs. In that case, appropriate hardware circuits are combined with the computer.

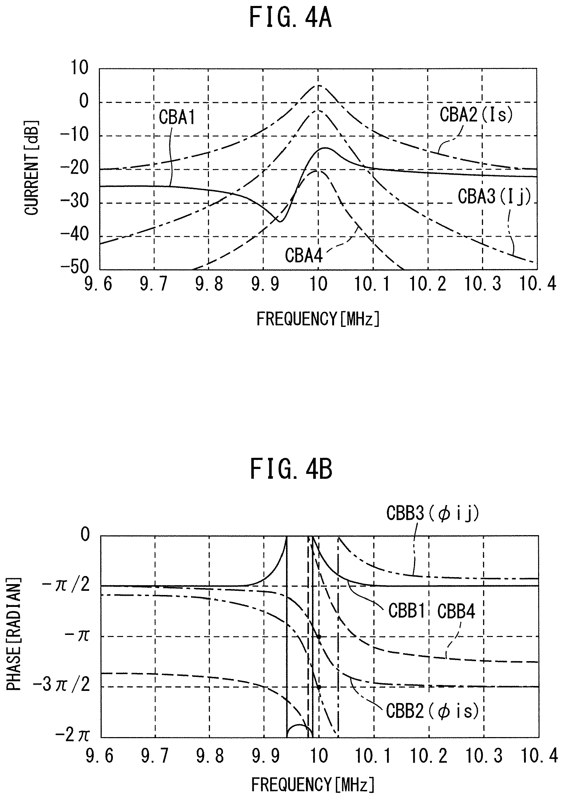

FIG. 4A and FIG. 4B are diagrams for illustrating resonance frequency control in the wireless power transfer system depicted in FIG. 2 and FIG. 3. In FIG. 4A, an axis of abscissa represents the frequency f [MHz] of the AC power supply 11, and an axis of ordinates represents the magnitude [dB] of current I flowing in each coil. In FIG. 4B, an axis of abscissa represents the frequency f [MHz] of the AC power supply 11, and an axis of ordinates represents the phase $\phi$ [radian] of the current I flowing in each coil.

The phase $\phi$ represents the phase difference $\Delta\phi$ from the phase $\phi$vs of the voltage Vs of the AC power supply 11, i.e., the phase difference $\Delta\phi$ using the phase $\phi$vs of the voltage Vs supplied to the power supply coil 12 as a reference. In other words, the phase $\phi$ is 0 when the phase $\phi$ corresponds to the phase $\phi$vs.

In reference signs CBA1 to CBA4 and CBB1 to CBB4 respectively designating curves, the last numbers 1, 2, 3, 4 indicate correspondence relationship with the power supply coil 12, the power source resonance coil 13, the power receiver resonance coil 22, the power extraction coil 23, respectively.

In addition, FIG. 4A and FIG. 4B illustrate a case of performing resonance frequency control, in which the power source resonance coil 13 or a set of the power source resonance coil 13 and the power receiver resonance coil 22 is controlled such that the resonance frequencies fs, fj are 10 MHz.

At that time, the target value $\phi$ms is set to "-$\pi$ radians (-180°)" in the target value setting unit 143, while the target value $\phi$mj is set to "-3$\pi$/2 radians (-270°)" in the target value setting unit 143.

In other words, the target value $\phi$mj is set to a value "$\phi$ms - $\pi$/2" obtained by adding -$\pi$/2 to the target value $\phi$ms, i.e., set to a phase being $\pi$/2 behind the target value $\phi$ms.

As indicated by the curve CBA2, the current Is of the power source resonance coil 13 peaks at 10 MHz which corresponds to the frequency fd of the AC power supply 11. In addition, as indicated by the curve CBB2, the phase $\phi$is of the current Is of the power source resonance coil 13 is -$\pi$ at 10 MHz which corresponds to the resonance frequency fs. In other words, the phase $\phi$is coincides with the target value $\phi$ms.

The power source resonance coil 13 may be regarded as a serial resonance circuit when viewed from the power supply coil 12. Thus, at the frequency fd being lower than the resonance frequency fs, a reactance is capacitive and becomes closer to -$\pi$/2, and at the higher frequency fd, the reactance is inductive and becomes closer to -3$\pi$/2.

Thus, the phase $\phi$is of the current Is flowing through the power source resonance coil 13 largely changes in the vicinity of the resonance frequency fs. The resonance frequency fs of the power source resonance coil 13 may be made to coincide with the frequency fd of the voltage Vs highly accurately by being controlled such that the phase $\phi$is, i.e., the phase difference $\Delta\phi$s is -$\pi$.

As indicated by the curve CBA1, the current I flowing in the power supply coil 12 also peaks at the resonance frequency fs. As indicated by the curve CBB1, the phase $\phi$i of the current I flowing in the power supply coil 12 is 0 or a leading phase in the vicinity of the resonance frequency fs. When the phase $\phi$i deviates from the resonance frequency fs, the phase $\phi$i becomes -$\pi$/2.

As indicated by the curve CBA3, the current Ij of the power receiver resonance coil 22 peaks at 10 MHz which coincides with the frequency fd of the AC power supply 11.

As indicated by the curve CBB3, the phase $\phi$ij of the current Ij of the power receiver resonance coil 22 is - 3$\pi$/2 at 10 MHz which coincides with the resonance frequency fs. In other words, the phase $\phi$ij coincides with the target value $\phi$mj. When the frequency fd is lower than the resonance frequency fs, the phase difference $\Delta\phi$ decreases and is close to -$\pi$/2. When the frequency fd is higher than the resonance frequency fs, the phase difference $\Delta\phi$ increases and is close to -5$\pi$/2, i.e., -$\pi$/2.

Thus, the phases $\phi$is and $\phi$ij of the currents Is and Ij respectively flowing in the power source resonance coil 13 and the power receiver resonance coil 22 largely change in the vicinity of the resonance frequencies fs and fj, respectively. By performing control such that the phases $\phi$is and $\phi$ij, i.e., the phase differences $\Delta\phi$s, $\Delta\phi$j are -$\pi$ or -3$\pi$/2, the resonance frequencies fs and fj of the power source resonance coil 13 and the power receiver resonance coil 22 may be made to highly accurately coincide with the frequency fd of the voltage Vs.

Consequently, even when environmental factors change, the resonance frequencies of the Power source system coil SC and the Power receiver system coil JC may be made to accurately coincide with the frequency fd of the AC power supply 11. Power may constantly be transferred from the power source device 3 to the power receiver device 4 at maximum efficiency.

In addition, control is performed, based on the phase difference $\Delta\phi$ of the coil current with respect to the voltage Vs of the AC power supply. Thus, accurate control may be performed without influence of variation in the amplitude of the current, which affects control, e.g., when using a sweep search method.

In the sweep search method, e.g., sweeping is performed on L or C in the Power source system coil SC or the Power receiver system coil JC. Thus, a position at which the current value of the coil is maximized (peaked) is searched for in a trial-and-error manner.

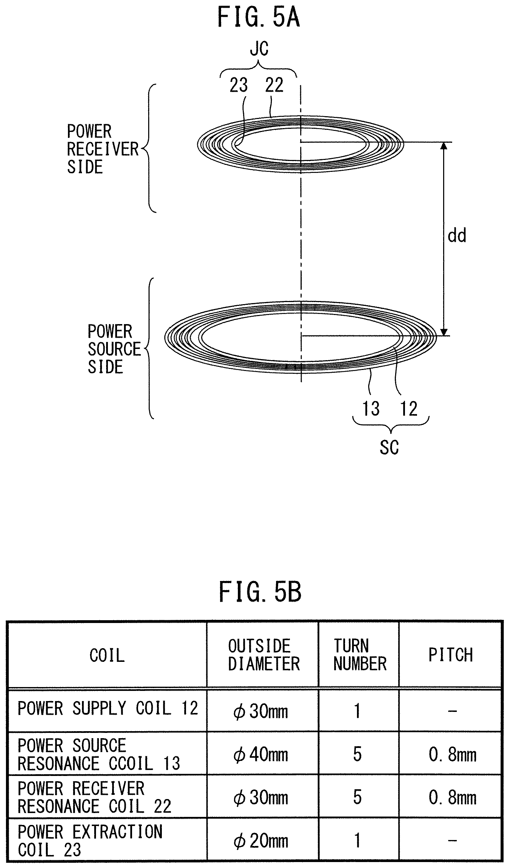

FIG. 5A and FIG. 5B are diagrams for illustrating conditions for simulation in the wireless power transfer system depicted in FIG. 2 and FIG. 3. As illustrated in FIG. 5A, the conditions for simulation are that the power supply coil 12 and the power source resonance coil 13 are coaxially arranged on a same plane, and that the power receiver resonance coil 22 and the power extraction coil 23 are also arranged coaxially on a same plane.

In addition, the distance dd between the Power source system coil SC (the power supply coil 12 and the power source resonance coil 13) and the Power receiver system coil JC (the power receiver resonance coil 22 and the power extraction coil 23) is set at 25 mm. The drive frequency (the frequency fd of the AC power supply 11) is set at 7 MHz. The load (the resistance value of the load device 21) is set at 10Ω. The thickness of each coil is set at $\phi$0.5 mm.

In addition, as indicated in FIG. 5B, the outside diameter of the power supply coil 12 is set at $\phi$30 mm. The number of turns of the power supply coil 12 is set at 1. The outside diameter of the power source resonance coil 13 is set at $\phi$40 mm. The number of turns of the power source resonance coil 13 is set at 5. The outside diameter of the power receiver resonance coil 22 is set at $\phi$30 mm. The number of turns of the power receiver resonance coil 22 is set at 5. The outside diameter of the power extraction coil 23 is set at $\phi$20 mm. The number of turns of the power extraction coil 23 is set at 1. The distance (pitch) between the centers of adjacent windings of each of the power source resonance coil 13 and the power receiver resonance coil 22 is set at 0.8 mm.

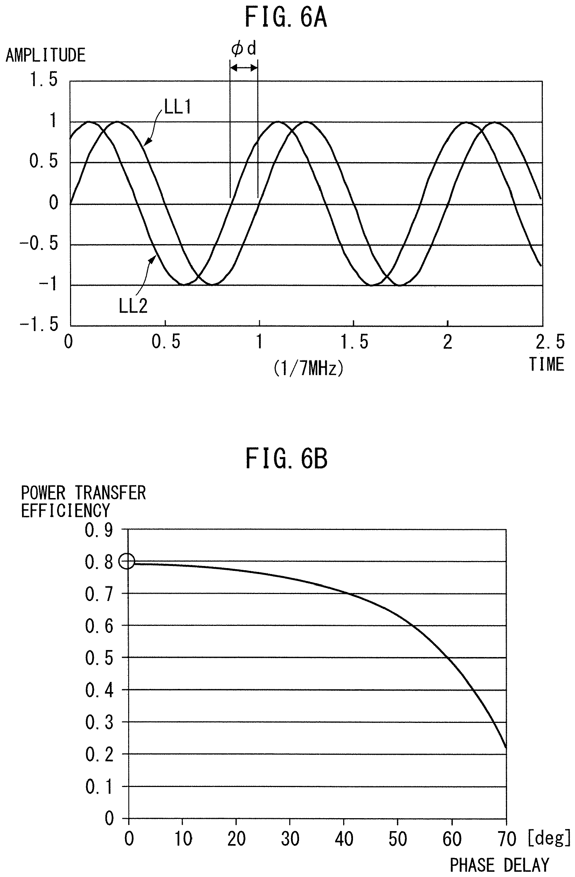

FIG. 6A and FIG. 6B are diagrams depicting a result of simulation in the wireless power transfer system depicted in FIG. 2 and FIG. 3, which is performed under the conditions for simulation illustrated in FIG. 5A and FIG. 5B.

In FIG. 6A, the axis of ordinates represents the amplitude of a drive voltage, which is normalized (the maximum amplitude is set to "1"). The axis of abscissas represents time normalized (1/7 MHz is set to "1"). The reference sign $\phi$d represents phase delays of a power source side drive voltage LL1 and a power receiver side drive voltage LL2. In FIG. 6B, the axis of ordinates represent a power transfer efficiency (the maximum efficiency is set to "1"), and the axis of abscissas represents a phase delay $\phi$d (deg: °).

As indicated in FIG. 6B, a power transfer efficiency decreases with increase of the phase delays $\phi$d of the power source side drive voltage LL1 and the power receiver side drive voltage LL2. Particularly, it is seen that when the phase delay $\phi$d exceeds 40°, the power transfer efficiency decreases largely.

When the drive frequency is 7MHz, a delay time td corresponding to a phase delay of 1° is calculated as follows. td = 1 ÷ $(7\times10^6\times360)$ = 3.97 $\times$ $10^{-10}$ [sec]. Accordingly, the delay time Td corresponding to a phase delay of, e.g., 30° is calculated as follows. Td = $3.97\times10^{-10}\times30$ = 1.19$\times$ $10^{-8}$ [sec], i.e., 11.9 nsec.

As described above, e.g., when power transfer is performed by the wireless power transfer system depicted in FIG. 2 and FIG. 3, the power transfer efficiency decreases even for a very short delay time td. Thus, for control of the power receiver side, it is a prerequisite that the phase of a voltage waveform of the AC power supply 11 is accurately recognized without delay.

The power source 1 and the power receiver 2 each have a communication circuit which transmits and receives information concerning the positions of the transmitter and the receiver, electric power to be transferred, and the like. It is difficult for these communication circuits to process data for phase control of a drive voltage of 7 MHz (generally, hundreds of KHz to tens of MHz) .

Therefore, in the wireless power transfer system depicted in FIG. 2 and FIG. 3, the power source 1 is equipped with a dedicated phase transmission unit 145. In addition, the power receiver 2 is equipped with a dedicated phase reception unit 241. The phase of a voltage waveform of the AC power supply 11, which is obtained in the power source 1, is accurately transferred to the power receiver 2 without delay.

Thus, in the wireless power transfer system depicted in FIG. 2 and FIG. 3, the dedicated phase transmission unit 145 and the dedicated phase reception unit 241, each of which is capable of performing high-speed data transfer, are provided in the power source 1 and the power receiver 2, respectively. Accordingly, hardware volume increases. Thus, cost increases.

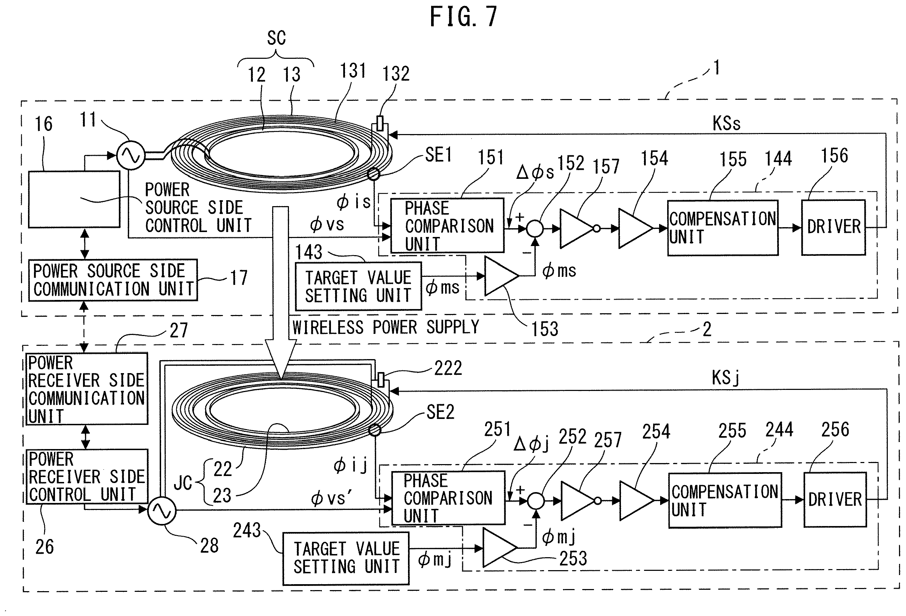

Hereinafter, embodiments of the wireless power transmission (wireless power transfer) system and a wireless power transfer method are described in detail with reference to the attached drawings. FIG. 7 is a block diagram depicting a wireless power transfer system according to a first embodiment.

It is apparent from comparison between FIG. 7 and FIG. 3 discussed above that, in the wireless power transfer system according to the first embodiment, a power source side control unit 16 and a power source side communication unit 17 are provided in a power source 1, instead of the dedicated phase transmission unit 145.

In addition, the wireless power transfer system according to the first embodiment is configured so that a power receiver side control unit 26, a power receiver side communication unit 27, and a power receiver side phase adjustment oscillation unit 28 are provided in the power receiver 2, instead of the dedicated phase reception unit 241.

The wireless power transfer system according to the first embodiment does not need high-speed data transfer as needed in the wireless power transfer system, e.g., depicted in FIG. 3. Therefore, the power source side communication unit 17 and the power receiver side communication unit 27 may act also as a communication circuit for transmitting and receiving information concerning the positions of the transmitter and the receiver, electric power to be transferred, and the like.

In other words, the wireless power transfer system according to the first embodiment need not perform real-time phase control of a resonance frequency of, e.g., hundreds of KHz to tens of MHz. Thus, a communication circuit generally provided therein may be used without change.

The configuration and operation of each of an AC power supply 11, a power supply coil 12, a power source resonance coil 13, a capacitor 132, a current detection sensor SE1, and a power source side feedback control unit 144, and the like of the power source 1 are substantially similar to those described with reference to FIG. 3.

The configuration and operation of each of a power receiver resonance coil 22, a power extraction coil 23, a capacitor 222, a current detection sensor SE2, and a power receiver side feedback control unit 244, and the like of the power receiver 2 are substantially similar to those described with reference to FIG. 3.

In the wireless power transfer system according to the first embodiment depicted in FIG. 7, a target value $\phi$ms in the power source 1 is output from a target value setting unit 143. A target value $\phi$mj in the power receiver 2 is output from a target value setting unit 243.

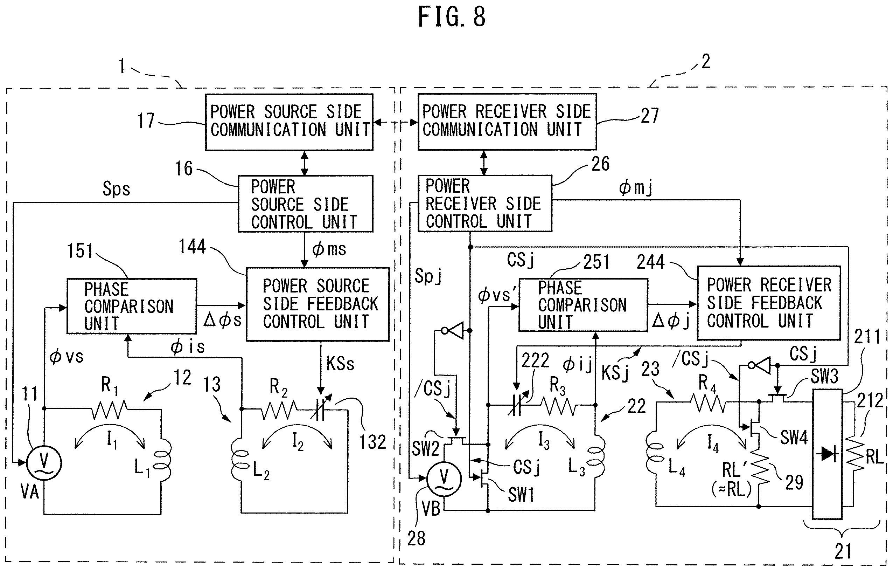

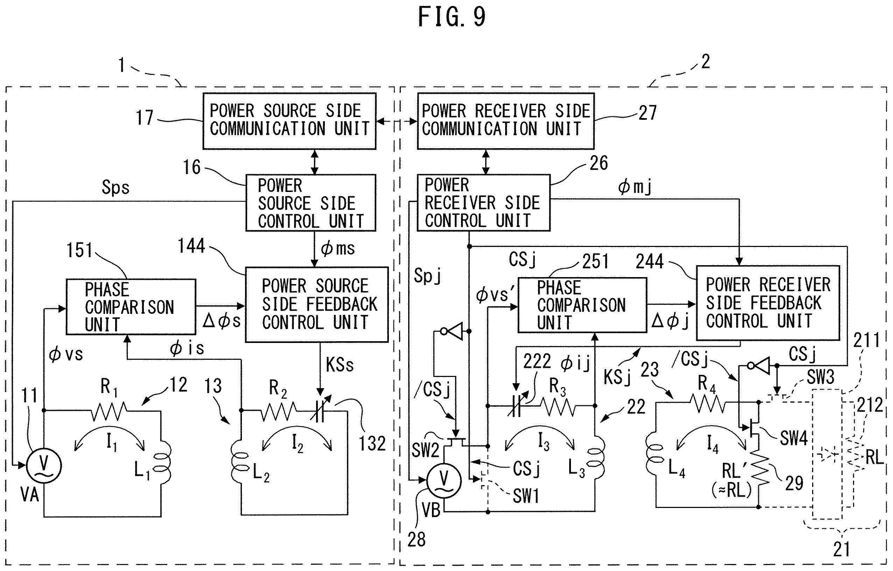

FIG. 8 is a block diagram depicting a wireless power transfer system according to a second embodiment. FIG. 9 to FIG. 12 are diagrams for illustrating an operation in the wireless power transfer system depicted in FIG. 8.

FIG. 8 to FIG. 10 illustrate the system while focusing on the power source side control unit 16, the power source side communication unit 17, the AC power supply 11, the power supply coil 12, the power source resonance coil 13, the capacitor (variable capacity device) 132, and the power source side feedback control unit 144 in the power source 1.

In FIG. 7 described above, a phase comparison unit (second phase comparison unit) 151 of the power source 1 is provided in the power source side feedback control unit 144. However, in FIG. 8 to FIG. 10, the phase comparison unit 151 and the power source side feedback control unit 144 (except the phase comparison unit 151) are drawn separately from each other.

In addition, FIG. 8 to FIG. 10 illustrate the system while focusing on a power receiver side control unit 26, a power receiver side communication unit 27, a power receiver side phase adjustment oscillation unit 28, the power receiver resonance coil 22, a power take-out unit 23, a capacitor 222, and a power receiver side feedback control unit 244 in the power receiver 2.

In FIG. 7 described above, a phase comparison unit (first phase comparison unit) 251 of the power receiver 2 is provided in the power receiver side feedback control unit 244. However, in FIG. 8 to FIG. 10, the phase comparison unit 251 and the power receiver side feedback control unit 244 (except the phase comparison unit 251) are drawn separately from each other.

In addition, in FIG. 8 to FIG. 10, a rectification circuit 211 and a load device 21 having a load (e.g., a battery: a resistance value RL) 212, and a dummy load 29 having a resistance value RL' which is substantially equal to the resistance value RL of the load 212, are drawn together with switches SW1 to SW4.

In addition, in FIG. 8 to FIG. 10, each of the power supply coil 12, the power source resonance coil 13, the power receiver resonance coil 22, and the power extraction coil 23 is drawn by depicting an equivalent circuit, using resistors $R_1$, $R_2$, $R_{13}$, and $R_4$, and inductors $L_1$, $L_2$, $L_3$, and $L_4$. Currents flowing in the power supply coil 12, the power source resonance coil 13, the power receiver resonance coil 22, and the power extraction coil 23 are designated as $I_1$, $I_2$, $I_3$, and $I_4$.

In the wireless power transfer system according to the second embodiment depicted in FIG. 8, a target value $\phi$ms in the power source 1 is output from the power source side control unit 16, and a target value $\phi$mj in the power receiver 2 is output from the power receiver side control unit 26.

In other words, the wireless power transfer system according to the second embodiment is configured to be substantially similar to the wireless power transfer system according to the first embodiment, except that the power source 1 does not have a target value setting unit 143, and that the power receiver 2 does not have a target value setting unit 243.

Accordingly, an operation of the wireless power transfer system according to the first embodiment differs only in places from which the target values $\phi$ms and $\phi$mj are output, and is similar to an operation of the wireless power transfer system according to the second embodiment which will be described below.

Thus, the target values $\phi$ms and $\phi$mj are output from the power source side control unit 16 and the power receiver side control unit 26. Consequently, each target value may be controlled as an optimal value for the wireless power transfer system to be used. Alternatively, each target value may be controlled by being changed to implement another function.

As indicated in FIG. 8, in the power source 1, the target value (target value of the phase difference $\Delta\phi s$) $\phi ms$ for the power source side feedback control unit 144 is output from the power source side control unit 16. The AC power supply 11 is controlled by a control signal Sps output from the power source side control unit 16.

In addition, in the power receiver 2, the target value (target value of the phase difference $\Delta\phi j$) $\phi mj$ for the power receiver side feedback control unit 244 is output from the power receiver side control unit 26. The power receiver side phase adjustment oscillation unit 28 is controlled by a control signal Spj output from the power receiver side control unit 26.

The power receiver side phase adjustment oscillation unit 28 in the power receiver 2 outputs a signal (voltage VB) having a frequency to be used for power transfer, i.e., a fixed oscillating frequency being equal to that of the AC power supply 11 in the power source 1. The AC power supply 11 and the power receiver side phase adjustment oscillation unit 28 are controlled using, e.g., a crystal oscillator such that the oscillating frequencies thereof are accurately equal to each other.

As depicted in FIG. 8, in the power receiver 2, a switch SW1 is provided in the power receiver side resonance coil 22. A switch SW2 is provided between the power receiver side phase adjustment oscillation unit 28 and the power receiver resonance coil 22.

In the power receiver 2, a switch SW3 is provided between the power extraction coil 23 and the load device 21. A dummy load 29 is provided via a switch SW4 between both ends of the power extraction coil 23.

The switches SW1 to SW4 are, e.g., n-channel type MOS transistors (nMOS transistors) each having a gate to which a control signal is applied. When the level of each control signal is a high-level "H", each nMOS transistor is turned on. When the level of each control signal is a low-level "L", each nMOS transistor is turned off.

A control signal CSj output from the power receiver side control unit 26 is applied to the control terminal (gate of each nMOS transistor) of each of the switches SW1 and SW3. A control signal /CSj obtained by inverting the control signal CSj at an inverter is applied to the control terminal of each of the switches SW2 and SW4.

First, when the level of the control signal CSj output from the power receiver side control unit 26 is "L" (the level of the control signal /CSj is "H"), the switches SW1 and SW3 are turned off, and the switches SW2 and SW4 are turned on. This state corresponds to a time of adjustment of the resonance frequency, which is illustrated in FIG. 9.

In other words, as illustrated in FIG. 9, at the time of adjustment of the resonance frequency, the power receiver side phase adjustment oscillation unit 28 of the power receiver 2 is put into an operating state (i.e., turned on) by the control signal Spj output from the power receiver side control unit 26.

In addition, when the switch SW1 is turned off, and the switch SW2 is turned on, an output voltage VB of the power receiver side phase adjustment oscillation unit 28 is applied to both ends of the power receiver resonance coil 22. At that time, the power take-up coil 23 is disconnected from the load device 21 by the turn-off of the switch SW3. Instead, the power extraction coil 23 is connected to the dummy load 29 via the switch SW4 being in an on-state.

The resistance value RL' of the dummy load 29 is set to be substantially equal to the resistance value RL of the load 212 of the load device 21. The target value $\phi mj$ given to the power receiver side feedback control unit 244 from the power receiver side control unit 26 is set to, e.g., 0°.

The output voltage VB from the power receiver side phase adjustment oscillation unit 28 is used to adjust the resonance frequency in the power receiver 2, and therefore, the power capacity of the voltage VB is minute. Thus, e.g., a rectification circuit (rectification IC) 211 of the load device 21 may not be operated by the voltage VB, and the resistance value RL of the load resistor 212 may not be accurately reflected due to non-linear characteristics.

Thus, the dummy load 29 being comparable to the load resistor 212 is connected to the power extraction coil 23, instead of the actual load device 21. The adjustment of the resonance frequency of the power receiver 2 is made by the voltage VB corresponding to the minute power capacity.

Thus, in the power receiver 2, feedback control is performed such that the phase difference $\Delta\phi j$ between the phase $\phi vs'$ of the output voltage VB of the power receiver side phase adjustment oscillation unit 28 and the phase $\phi ij$ of the current $I_3$ flowing in the power receiver resonance coil 22 due to the voltage VB is equal to the target value $\phi mj$ (= 0°). In other words, the power receiver side feedback control unit 244 controls the electrostatic capacity of the capacitor 222 via a control signal KSj to be a predetermined value such that the phase difference $\Delta\phi j$ is equal to the target value $\phi mj$.

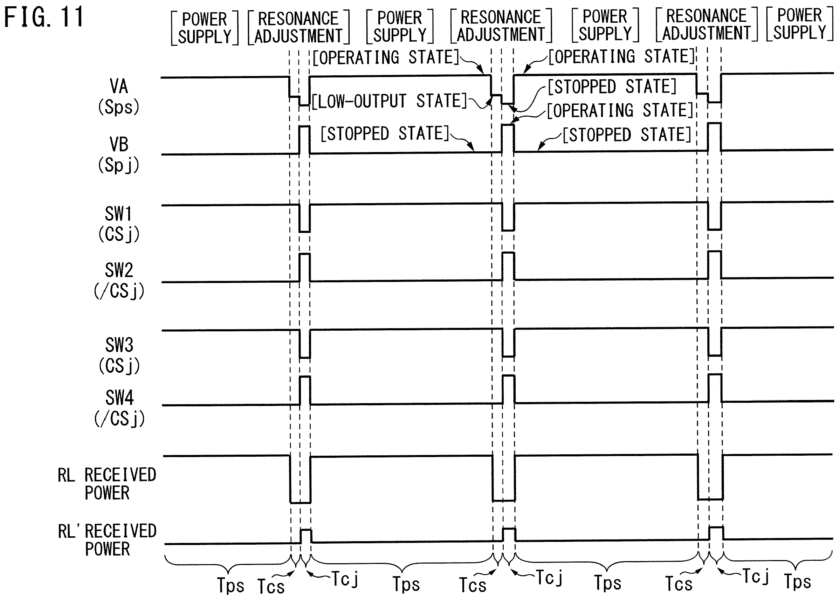

In the wireless power transfer system according to the second embodiment, as indicated in a timing chart illustrated in FIG. 11, in a time of adjustment of the resonance frequency (resonance adjustment), first, the resonance frequency of the power source 1 is adjusted in a time Tcs. Then, the resonance frequency of the power receiver 2 is adjusted in a time Tcj.

Accordingly, as indicated in FIG. 11, the above adjustment of the resonance frequency in the power receiver 2 is performed in the latter half Tcj of the time in which resonance adjustment processing is performed. In the first half Tcs of the time, the adjustment of the resonance frequency in the power source 1 is performed.

In other words, in the first half Tcs of the time in which resonance adjustment processing is performed, the AC power supply 11 of the power source 1 is put into a low output state (adjustment output state) by a control signal Sps output from the power source side control unit 16.

In the low output state of the AC power supply 11, the AC power supply 11 does not output a voltage for transferring power to the power receiver 2. The AC power supply 11 simply outputs a low voltage for adjusting the resonance frequency in the power source 1.

Consequently, in the power source 1, feedback control is performed such that the phase difference $\Delta\phi j$ between the phase $\phi vs$ of the output voltage VA of the AC power supply 11 and the phase $\phi is$ of the current Is flowing through the power source resonance coil 13 due to the voltage VA is equal to the target value $\phi mj$ (= 180°).

The feedback control is such that, as described with reference to FIG. 2 to FIG. 4B, e.g., the power source side feedback control unit 144 controls the electrostatic capacity of the capacitor 132 via a control signal KSs to a predetermined value so that the phase difference $\Delta\phi s$ is equal to the target value $\phi ms$.

The adjustment of the resonance frequency in the power source 1 is not necessarily performed immediately before the adjustment of the resonance frequency in the power receiver 2. The adjustment of the resonance frequency in the power source 1 may be performed simultaneously with or immediately after the adjustment of the resonance frequency in the power receiver 2, or alternatively, at another appropriate timing.

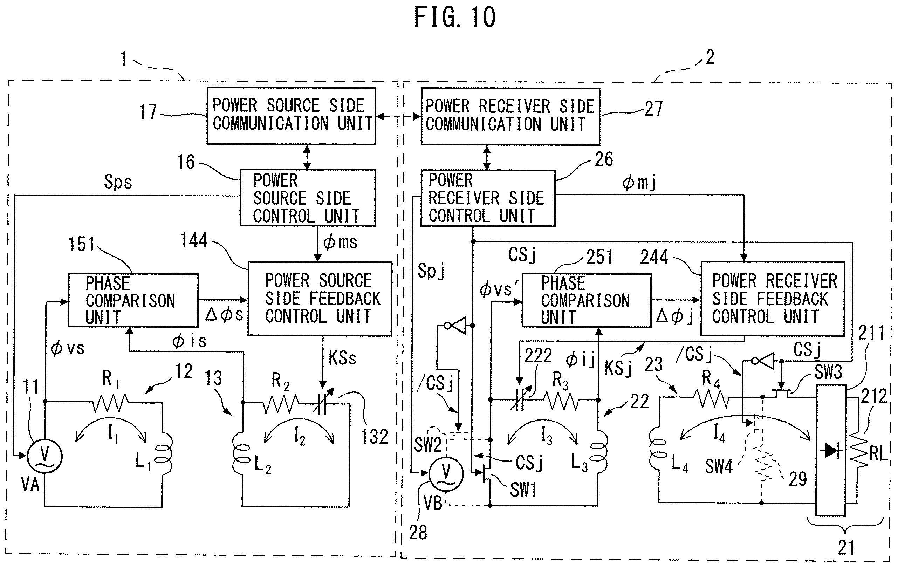

Next, when the control signal CSj output from the power receiver side control unit 26 is "H" in level (the control signal /CSj is "L" in level), the switches SW1 and SW3 are turned on, and the switches SW2 and SW4 are turned off. This state corresponds to a power supply time illustrated in FIG. 10 (or to a normal state in which power is wirelessly transferred from the power source 1 to the power receiver 2).

In other words, as illustrated in FIG. 10, in the power supply time, the power receiver side phase adjustment oscillation unit 28 of the power receiver 2 is put into a stopped state (off-state) by the control signal Spj output from the power receiver side control unit 26. In addition, when the switch SW2 is turned off, the power receiver side phase adjustment oscillation unit 28 is disconnected from the power receiver resonance coil 22.

In addition, when the switch SW1 is turned on, the power receiver resonance coil 22 receives power from the power source resonance coil 13 in the power source 1 by magnetic field resonance (magnetic field resonating). At that time, the power extraction coil 23 is connected to the load device 21 by the turn-on of the switch SW3 and the turn-off of the switch SW4.

In the power source 1, the AC power supply 11 is put into an operating state (which is not a low power operating state, and is a normal operating state) by a control signal Sps output from the power source side control unit 16.

The resonance frequency of the power source resonance coil 13 in the power source 1 is controlled so as to coincide with the frequency of the AC power supply 11 in the time Tcs. The resonance frequency of the power receiver resonance coil 22 in the power receiver 2 is controlled so as to coincide with the frequency of the power receiver side phase adjustment oscillation unit 28. The frequency of the AC power supply 11 and the frequency of the power receiver side phase adjustment oscillation unit 28 are accurately controlled using, e.g., a crystal oscillator.

Accordingly, the power transfer by the magnetic field resonance from the power source 1 to the power receiver 2, in both of which the resonance frequencies are adjusted, may be performed with high power transfer efficiency. In FIG. 11, the resonance frequency adjustment times (Tcs, Tcj: resonance adjustment) in the power source 1 and the power receiver 2 are repeated at predetermined intervals.

The intervals for repeating the resonance adjustment may variously be set according to the number of the power source 1 and the power receiver 2, the power capacity thereof, or the surrounding environment thereof, or the like. For example, a several-minute interval may be set as the interval for repeating the resonance adjustment.

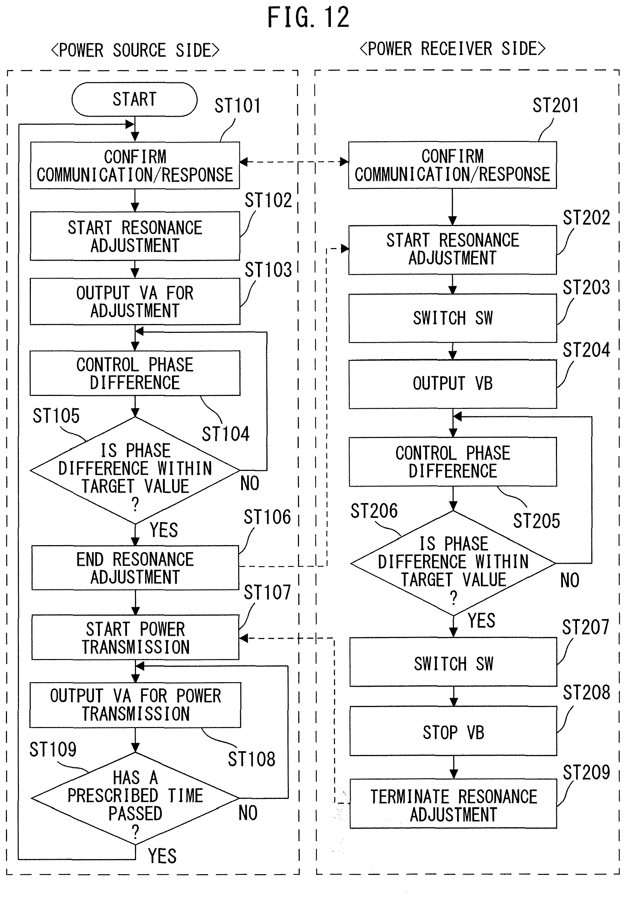

Next, a flow of an operation of a wireless power transfer system according to a second embodiment is described with reference to a flowchart illustrated in FIG. 12. First, when wireless power transfer processing is commenced (started), in each of steps ST101 and ST201, the power source side communication unit 17 (of the power source 1) and the power receiver side communication unit 27 (of the power receiver 2) perform communication/response confirmation, respectively. Then, each of the power source 1 and the power receiver 2 proceeds to a next step.

In other words, in steps ST101 and ST201, e.g., it is checked whether the power receiver 2 is present within a range in which power may be transferred by the power source 1 to the power receiver 2. In addition, the transfer of information concerning the position and the inclination of the power receiver 2, and electric power to be transmitted, and the authentication of the power receiver 2 in a paid power transfer system are performed.

On the power source side, next, the processing proceeds to step ST102, whereupon the adjustment (resonance adjustment) of the resonance frequency in the power source 1 is started, which has been described with reference to the time Tcs depicted in FIG. 9 and FIG. 11. In step ST103, the output voltage VA of the AC power supply 11 is set to the adjustment output voltage (low output voltage). The processing proceeds to step ST104 in which the phase difference is controlled.

In other words, in step ST104, phase difference control processing is performed by the power source side feedback control unit 144. In step ST105, the phase difference control processing in step ST104 is repeated until the phase difference $\Delta\phi s$ becomes less than the target value $\phi ms$.

Then, if it is determined in step ST105 that the phase difference $\Delta\phi s$ is within a range prescribed by the target value $\phi ms$, the processing proceeds to step ST106 in which the resonance adjustment processing by the power source 1 is terminated. Then, the processing proceeds to step ST107.

As described with reference to FIG. 9 and FIG. 11, when the resonance frequency adjustment processing by the power source 1 is terminated in the time Tcs, in step ST202, on the power receiver side, the adjustment of the resonance frequency (resonance adjustment) in the power receiver 2 is started in a time Tcj subsequent to the time Tcs.

The power receiver 2 recognizes the termination of the resonance frequency adjustment processing in the power source 1 by the communication between the power source side communication unit 17 and the power receiver side communication unit 27. In step ST202, the resonance adjustment is started by the power receiver 2.

In step ST203, the switching of the switches SW1 to SW4 described with reference to FIG. 9 is performed. Then, the processing proceeds to step ST204 in which the power receiver side phase adjustment oscillation unit 28 is put into an operating state (in which the voltage VB is output) by the power receiver side control unit 26.

More specifically, the switches SW1 and SW3 are turned off. The switches SW2 and SW4 are turned on. The output voltage VB of the power receiver side phase adjustment oscillation unit 28 is applied to both ends of the power receiver resonance coil 22. In addition, the load device 21 is disconnected from the power extraction coil 23, and instead, the dummy load 29 is connected to the power extraction coil 23.

In addition, the processing proceeds to step ST205 in which phase difference control processing is performed by the power receiver side feedback control unit 244. In step ST206, the phase difference control processing in step ST205 is repeated until the phase difference $\Delta\phi j$ becomes less than the target value $\phi mj$.

Then, if it is determined in step ST206 that the phase difference $\Delta\phi j$ is within a range prescribed by the target value $\phi mj$, the processing proceeds to step ST207 in which the switching of the switches SW1 to SW4 described with reference to FIG. 10 is performed. Then, the processing proceeds to step ST208.

In step ST208, the power receiver side phase adjustment oscillation unit 28 is put into a stopped state (the output voltage VB is stopped) by the power receiver side control unit 26. Then, the processing proceeds to step ST209 in which the resonance adjustment processing in the power receiver 2 is terminated. The power receiver side control unit 26 notifies the power source side of the termination of the resonance adjustment processing.

In other words, the power source 1 recognizes the termination of the resonance frequency adjustment processing in the power receiver 2 by the communication between the power source side communication unit 17 and the power receiver side communication unit 27. In step ST107, power transmission is started by the power source 1.

In other words, as described with reference to FIG. 10, in the power source side, in step ST108, the AC power supply 11 is put into a normal operating state by the control signal Sps output from the power source side control unit 16, instead of being put into a low power operating state. The AC power supply 11 outputs a power transmission output voltage VB.

Accordingly, both of the power source 1 and the power receiver 2 are put into a state in which the resonance frequency adjustment is completed. In this state, power transfer by magnetic field resonance from the power source 1 to the power receiver 2 is performed. Thus, power transfer with high power transfer efficiency is made possible.

In addition, the processing proceeds to step ST109. If it is determined in step ST109 that a prescribed time has passed, the processing returns to step ST101 (ST201). Then, similar processing is repeated. In other words, the adjustment of the resonance frequency in the power source 1 and the power receiver 2 is repeated at predetermined intervals.

In step ST103, the output voltage VA of the AC power supply 11 is set to a low output voltage for adjustment. Thus, e.g., instead of starting the adjustment of the resonance frequency in the power receiver 2 after the adjustment of the resonance frequency in the power source 1 is terminated, both of the adjustment of the resonance frequency in the power source 1 and the adjustment of the resonance frequency in the power receiver 2 may be performed in parallel.

In other words, as described above, the adjustment of the resonance frequency in the power source 1 is not necessarily performed immediately before the adjustment of the resonance frequency in the power receiver 2. The adjustment of the resonance frequency in the power source 1 may be performed simultaneously with or immediately after the adjustment of the resonance frequency in the power receiver 2, or alternatively, at another appropriate timing.

Thus, in accordance with the wireless power transfer system according to the second embodiment, it is not necessary for the power source to transmit the phase of the voltage waveform of the AC power supply accurately without delay to the power receiver. Thus, a dedicated communication circuit capable of performing high-speed data transfer is unnecessary. The hardware volume may be reduced. The cost may be decreased. This is the same with the above first embodiment and a third embodiment which is described below.

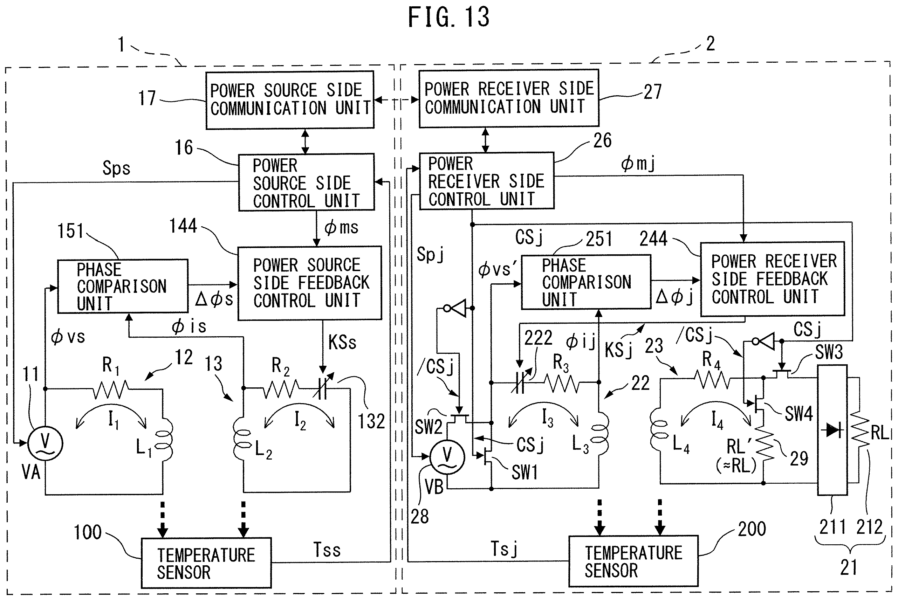

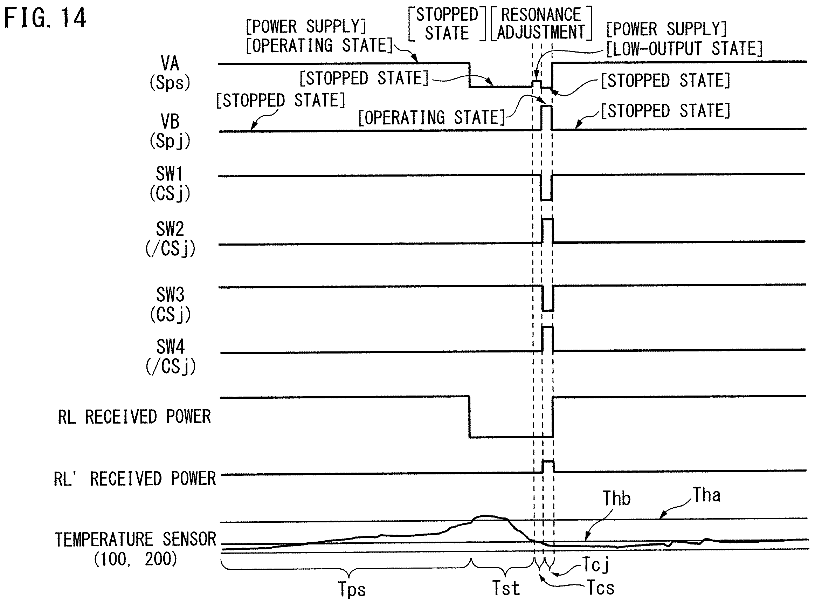

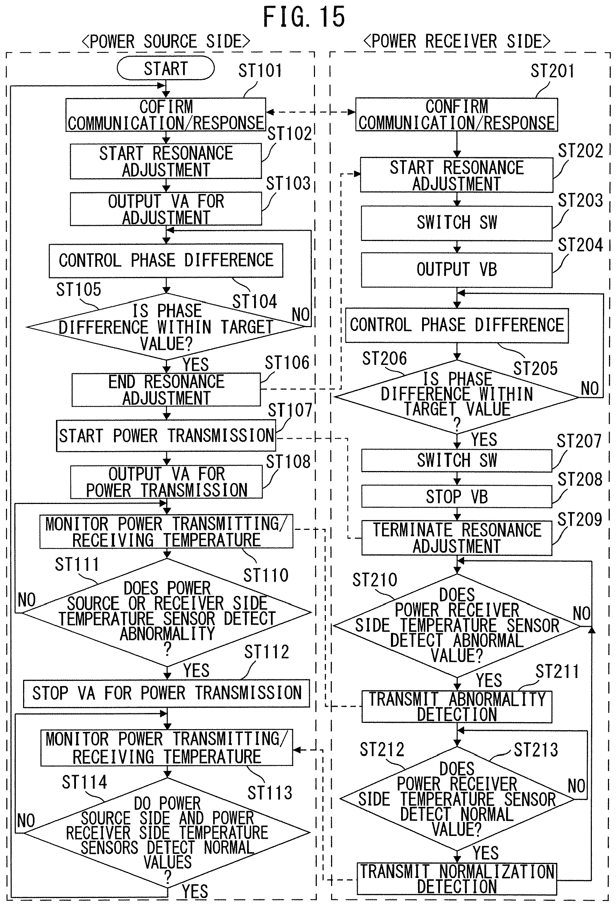

FIG. 13 is a block diagram depicting a wireless power transfer system according to the third embodiment. FIG. 14 and FIG. 15 are diagrams for illustrating an operation of the wireless power transfer system depicted in FIG. 13. As is apparent from the comparison between FIG. 13 and FIG. 8 described above, in the wireless power transfer system according to the third embodiment, a power source 1 includes a temperature sensor (second temperature sensor) 100. The power receiver 2 includes a temperature sensor (first temperature sensor) 200.

The temperature sensor 100 measures (detects) the temperature of each of a power supply coil 12 and a power source resonance coil 13 in the power source 1, and outputs a temperature signal (second temperature signal) Tss to a power source side control unit 16. The temperature sensor 200 measures the temperature of each of a power receiver resonance coil 22 and a power extraction coil 23 in the power receiver 2, and outputs a temperature signal (first temperature signal) Tsj to a power receiver side control unit 26.

For example, if the power supply coil 12 and the power source resonance coil 13 are not coaxially arranged, the temperature sensor 100 has only to measure the temperature of the power source resonance coil 13. Similarly, e.g., if the power receiver resonance coil 22 and the power extraction coil 23 are not coaxially arranged, the temperature sensor 200 has only to measure the temperature of the power receiver resonance coil 22.

Next, an operation of the wireless power transfer system depicted in FIG. 13 is described with reference to a timing chart illustrated in FIG. 14, and a flowchart depicted in FIG. 15. In a timing chart depicted in FIG. 14, a power supply time (time Tps) and a resonance adjustment time (times Tcs and Tcj) are substantially the same as those depicted in FIG. 11. Thus the description of the power supply time and the resonance adjustment time is omitted.

In the flowchart illustrated in FIG. 15, processing in steps ST101 to ST108 on the power source side (power source 1), and processing in steps ST201 to ST209 on the power receiver side (power receiver 2) are substantially similar to FIG. 12. The description of the steps is omitted.

As indicated in FIG. 15, in step ST209 on the power receiver side, resonance adjustment processing in the power receiver 2 is terminated. The power source side is notified of the termination of the resonance adjustment processing. Then, when power transmission is started in step ST107 on the power source side, the processing proceeds to step ST210 on the power receiver side.

In other words, in step ST210 on the power receiver side, it is determined whether the temperature sensor 200 provided in the power receiver 2 detects an abnormality, i.e., whether temperature signals Tsj by the temperature sensor 200 representing the temperature of the power receiver resonance coil 22 and the temperature of the power extraction coil 23 indicate abnormal values. If it is determined in step ST210 that the temperature sensor 200 does not detect an abnormality, power transfer from the power source 1 to the power receiver 2 is continued in an unchanged state.

On the other hand, if it is determined in step ST210 that the temperature sensor 200 detects an abnormality, i.e., the temperature signal Tsj exceeds a threshold temperature Tha indicating an abnormality, the processing proceeds to step ST211 in which the detection of an abnormality by the temperature sensor 200 is transmitted to the power receiver side. The detection of an abnormality in step ST211 on the power receiver side is transmitted to the power receiver side. Then, in step ST110, the detection of the abnormality is processed as the power transmitting/receiving temperature monitoring.

Then, in the power receiver side, the processing proceeds to step ST212 in which it is determined whether the power receiver side temperature sensor 200 detects a normal value. If it is determined in step ST212 that the power receiver side temperature sensor 200 does not detect a normal value, the power receiver 2 maintains the state without change and waits for the detection of a normal value by the power receiver side temperature sensor 200.

As a result of the processing in step ST212 on the power receiver side, a power transmission output voltage VA is stopped by performing processing in step ST112 on the power source side, as will be described below. Thus, the power transfer is stopped. The level of the temperature signal Tsj output from the power receiver side temperature sensor 200 is lowered with time.

If it is determined in step ST212 on the power receiver side that the power receiver side temperature sensor 200 detects a normal value, the processing proceeds to step ST213 in which the power source side is notified of the detection of a normal value by the power receiver side temperature sensor 200. Then, the processing returns to step ST210 in which similar processing is performed.

As indicated in FIG. 15, in step ST108 on the power source side, the AC power supply 11 outputs a power transmission output voltage VB for performing a usual power transmission operation. Then, the processing proceeds to step ST110 in which power transmitting/receiving temperature monitoring is performed.

The power transmitting/receiving temperature monitoring in step ST110 includes the monitoring of the temperature of each of the power supply coil 12 and the power source resonance coil 13 by the temperature sensor 100 of the power source 1, and the monitoring of the temperature of each of the power receiver resonance coil 22 and the power extraction coil 23 by the temperature sensor 200 of the power receiver 2.

The temperature signal Tss detected by the power source side temperature sensor 100 is input to the power source side control unit 16 without change. The temperature signal Tsj detected by the power receiver side temperature sensor 200 is transmitted to the power source side control unit 16 via communication (communication units 17, 27, and the like).

In step ST111, it is determined whether the power source side temperature sensor 100 or the power receiver side temperature sensor 200 detects an abnormality. If it is determined that both of the sensors do not detect an abnormality, the power transfer from the power source 1 to the power receiver 2 is continued while performing the power transmitting/receiving temperature monitoring.

On the other hand, if it is determined in step ST111 that at least one of the power source side temperature sensor 100 or the power receiver side temperature sensor 200 detects an abnormality, the processing proceeds to step ST112 in which the output voltage VA for power transmission is stopped. In other words, the power source side control unit 16 stops an operation of the AC power supply 11 by a control signal Sps.

A time, in which an operation of the AC power supply 11 is stopped (the voltage VB is stopped), corresponds to a time (stopped time) Tst depicted in FIG. 14 from a moment, at which the temperature signal (Tss, Tsj) of the temperature sensor (100, 200) exceeds a threshold temperature Tha indicating an abnormality, to a moment at which the temperature signal is lower than an upper limit temperature Thb in a normal operation.

If the output voltage VB for power transmission is stopped in step ST112, then, the processing proceeds to step ST113 in which the power transmitting/receiving temperature monitoring is performed again. In other words, in step ST114, it is determined whether both of the power source side temperature sensor 100 and the power receiver side temperature sensor 200 detect a normal value. If it is determined that at least one of the power source side temperature sensor 100 and the power receiver side temperature sensor 200 detects an abnormality, the power source 1 continues to stop the output voltage VB for power transmission, while performing power transmitting/receiving temperature monitoring.

On the other hand, it is determined in step ST114 that both of the power source side temperature sensor 100 and the power receiver side temperature sensor 200 detect normal values, the processing returns to step ST101 (ST201).

In other words, it is determined that the temperature signals Tss and Tsj respectively detected by the temperature sensors 100 and 200 are lower than the upper limit temperature Thb in a normal operation and in a range of normal values, the processing returns to steps ST101 and ST201. Then, similar processing is repeated.

Even in the wireless power transfer system according to the third embodiment depicted in FIG. 13, similarly to, e.g., the first embodiment depicted in FIG. 7, target value setting units 143 and 243 may be provided in the power source 1 and the power receiver 2, respectively, to output target values $\phi$ms and $\phi$mj.

In the above embodiments of the wireless power transfer system, it has been described that the number of the power sources 1 and that of the power receivers 2 are 1. It is apparent that the number of the power sources 1 and that of the power receivers 2 each may be plural. The power transfer from the power source resonance coil (LC resonator) 13 to the power receiver resonance coil (LC resonator) 22 is not limited to that using a magnetic field resonance (magnetic field resonating). The power transfer may use, e.g., an electric field resonance (electric field resonating).

All examples and conditional language recited herein are intended for educational purposes to aid the reader in understanding the invention and the concepts contributed by the inventor for the development of technology.

All examples and conditional language recited herein are to be construed as being without limitation to such specifically recited examples and conditions, as well as the organization of such examples in the specification related to a showing of the superiority and inferiority of the invention.

In addition, although the embodiments of the present invention have been described in detail, it should be understood that the various changes, substitutions, and alterations could be made hereto without departing from the scope of the invention.

REFERENCE SIGNS LIST

    1 Power source (primary side: power source side)
    2 Power receiver (secondary side: power receiver side)
    11 AC power supply
    12 Power supply coil
    13 Power source resonance coil (LC resonator)
    14 Power source side control circuit
    16 Power source side control unit
    17 Power source side communication unit
    21 Load device
    22 Power receiver resonance coil (LC resonator)
    23 Power extraction coil
    24 Power receiver side control circuit
    26 Power receiver side control unit
    27 Power receiver side communication unit
    28 Power receiver side phase adjustment oscillation unit
    29 Dummy load
    100 Temperature sensor (second temperature sensor)
    132, 222 Capacitors (variable capacitor: variable capacity device)

143, 243 Target value setting units

144 Power source side feedback control unit

145 Phase transmission unit

151 Phase comparison unit (second phase comparison unit)

200 Temperature sensor (first temperature sensor)

211 Rectification circuit (rectification IC)

212 Load resistor

241 Phase reception unit

244 Power receiver side feedback control unit

251 Phase comparison unit (first phase comparison unit)

SC Power source system coil

JC Power receiver system coil

**Claims**

1.  A power receiver (2) comprising:

    a power receiver resonance coil (22) configured to wirelessly receive power from a power source (1) using magnetic field resonance or electric field resonance;
    a power receiver side phase adjustment oscillation unit (28) configured to output a voltage which oscillates at a predetermined frequency;
    a power receiver side communication unit (27) configured to communicate with the power source (1);
    a power receiver side control unit (26) configured to receive an output from the power receiver side communication unit (27), and to adjust a resonance frequency of the power receiver resonance coil (22) using an output voltage from the power receiver side phase adjustment oscillation unit (28); and
    a first phase comparison unit (251) configured to compare a phase of an output voltage from the power receiver side phase adjustment oscillation unit (28) and a phase of current flowing in the power receiver resonance coil (22), without directly using phase information output from the power source (1).

2.  The power receiver (2) as claimed in claim 1, further comprising:

    a power extraction coil (23) configured to receive power from the power receiver resonance coil (22) using electromagnetic induction;
    a load device (21) configured to receive power taken out of the power extraction coil (23); and
    a dummy load (29) having a resistance value equivalent to the load device (21),
    wherein the power receiver side control unit (26) is configured to apply an output voltage of the power receiver side phase adjustment oscillation unit (28) to the power receiver resonance coil (22), and to adjust a resonance frequency of the power receiver resonance coil (22) by setting the dummy load as a load of the power extraction coil (23).

3.  The power receiver (2) as claimed in claim 1 or 2, wherein the power receiver side control unit (26) is configured to stop, after adjusting a resonance frequency of the power receiver resonance coil (22), the power receiver side phase adjustment oscillation unit (28) and cause the power receiver resonance coil (22) to receive power from the power source (1), and to receive power from the power source (1) by setting the load device (21) as a load of the power extraction coil (23).

4.  The power receiver (2) as claimed in any one of claims 1 to 3, further comprising:
    a power receiver side feedback control unit (244) configured to control a phase difference output from the first phase comparison unit (251) according to a target value, wherein the power receiver side feedback control unit (244) is configured to adjust a resonance frequency of the power receiver resonance coil (22) by controlling a variable-capacity capacitor (222) provided at the power receiver resonance coil (22).

5.  The power receiver (2) as claimed in claim 4, further comprising: a target value setting unit (243) configured to set the target value, wherein the power receiver side feedback control unit (26) is configured to receive an output of the target value setting unit (243),
    or wherein the target value is output from the power receiver side control unit (26), wherein the power receiver side feedback control unit (244) is configured to receive an output of the power receiver side control unit (26).

6. The power receiver (2) as claimed in any one of claims 1 to 5, wherein adjustment of the resonance frequency of the power receiver resonance coil (22) is repeated at predetermined intervals.

7. The power receiver (2) as claimed in any one of claims 1 to 6, further comprising: a first temperature sensor (200) configured to measure a temperature of the power receiver resonance coil (22), wherein the power receiver side control unit (26) is configured to perform control by receiving a first temperature signal from the first temperature sensor (200),
preferably wherein the power receiver side control unit (26) is configured to transmit, to the power source (1) via the power receiver side communication unit (27), a first temperature signal output from the first temperature sensor (200).

8. A wireless power transfer system including at least one power source (1) and at least one power receiver (2), wherein the power receiver (2) is a power receiver as claimed in any one of claims 1 to 7.

9. The wireless power transfer system as claimed in claim 8, wherein the power source (1) comprises:

an AC power supply (11) configured to output a voltage which oscillates at a predetermined frequency;
a power supply coil (12) configured to receive an output voltage of the AC power supply (11);
a power source resonance coil (13) configured to receive power from the power supply coil (12) using electromagnetic induction, and wirelessly transfer power to the power receiver resonance coil (22) using magnetic field resonance or electric field resonance; and
a power source side communication unit (17) configured to communicate with the power receiver (2).

10. The wireless power transfer system as claimed in claim 9, wherein the power source (1) further comprises: a power source side control unit (16) configured to receive an output from the power source side communication unit (17), and adjust a resonance frequency of the power source resonance coil (13) using an output voltage of the AC power supply (11),
preferably wherein the power source side control unit (16) is configured to adjust a resonance frequency of the power source resonance coil (13) by setting an output voltage of the AC power supply (11) to a voltage being lower than a voltage at which power is transferred from the power source (1) to the power receiver (2),
preferably wherein adjustment of a resonance frequency of the power source resonance coil (13) by the power source side control unit (16) is performed immediately before adjustment of a resonance frequency of the power receiver resonance coil (13) by the power receiver side control unit (16).

11. The wireless power transfer system as claimed in claim 10, wherein the resonance frequency of the power source resonance coil (13), which is adjusted by the power source side control unit (16), is equal to the resonance frequency of the power receiver resonance coil (22), which is adjusted by the power receiver side control unit (26).

12. The wireless power transfer system as claimed in claim 10 or 11, wherein the power source (1) further comprises: a second temperature sensor (100) configured to measure a temperature of the power source resonance coil (13), wherein the power source side control unit (16) is configured to perform control by receiving a second temperature signal from the second temperature sensor (100),
preferably wherein the power source side control unit (16) is configured to perform processing at occurrence of abnormal temperature by receiving a first temperature signal from the first temperature sensor (100) of the power receiver (1) via the power receiver side communication unit (27) and the power source side communication unit (17), together with a second temperature signal output from the second temperature sensor (100).

13. The wireless power transfer system as claimed in any one of claims 8 to 12, wherein the power source (1) further comprises:

a second phase comparison unit (151) configured to compare a phase of an output voltage output from the AC power supply (11) and a phase of current flowing in the power source resonance coil (13); and
a power source side feedback control unit (144) configured to control, according to a target value, a phase difference output from the second phase comparison unit (151), wherein the power source side feedback control unit (144) is configured to adjust a resonance frequency of the power source resonance coil (13) by controlling a variable-capacity capacitor (132) provided at the power source resonance coil (13).

14. A wireless power transfer method for wirelessly receiving power from a power source (1) by a power receiver (2) using magnetic field resonance or electric field resonance,
wherein a power receiver side phase adjustment oscillation unit (28) outputting to the power receiver (2) a voltage which oscillates at a predetermined frequency is provided, and
wherein a resonance frequency of the power receiver (2) is adjusted using an output voltage output from the power receiver side phase adjustment oscillation unit (28) by comparing a phase of an output voltage from the power receiver side phase adjustment oscillation unit (28) and a phase of current flowing in the power receiver resonance coil (22), without directly using phase information output from the power source (1).

15. The wireless power transfer method as claimed in claim 14, wherein a resonance frequency of the power source (1) is adjusted by setting an output voltage of an AC power supply (11) in the power source (1) at a voltage lower than a voltage at which power is transferred from the power source (1) to the power receiver (2), and
wherein the resonance frequency of the power source (1) is equal to the resonance frequency of the power receiver (2).

**Patentansprüche**

1. Energieempfänger (2), umfassend:

   eine Resonanzspule eines Energieempfängers (22), konfiguriert, um drahtlos unter Verwendung einer Magnetfeldresonanz oder einer Resonanz eines elektrischen Felds Energie von einer Energiequelle (1) zu empfangen;
   eine energieempfängerseitige Oszillationseinheit zur Phaseneinstellung (28), konfiguriert, um eine Spannung auszugeben, die mit einer vorbestimmten Frequenz oszilliert;
   eine energieempfängerseitige Kommunikationseinheit (27), konfiguriert, um mit der Energiequelle (1) zu kommunizieren;
   eine energieempfängerseitige Steuereinheit (26), konfiguriert, um eine Ausgabe von der energieempfängerseitigen Kommunikationseinheit (27) zu empfangen und eine Resonanzfrequenz der Resonanzspule eines Energieempfängers (22) unter Verwendung einer Ausgabespannung von der energieempfängerseitigen Phaseneinstellungsoszillationseinheit (28) anzupassen; und
   eine erste Phasenvergleichseinheit (251), konfiguriert, um eine Phase einer Ausgabespannung aus der energieempfängerseitigen Phaseneinstellungsoszillationseinheit (28) und eine Phase des Stroms, der in der Resonanzspule eines Energieempfängers (22) fließt, zu vergleichen, ohne direkt die Phaseninformationsausgabe der Energiequelle (1) zu verwenden.

2. Energieempfänger (2) nach Anspruch 1, ferner umfassend:

   eine Energieentnahmespule (23), konfiguriert, um Energie von der Resonanzspule eines Energieempfängers (22) unter Verwendung von elektromagnetischer Induktion zu empfangen; eine Lastvorrichtung (21), konfiguriert, um Energie zu empfangen, die aus der Energieentnahmespule (23) entnommen wurde; und
   eine Dummylast (29), die einen Widerstandswert aufweist, der der Lastvorrichtung (21) entspricht,
   wobei die energieempfängerseitige Steuereinheit (26) konfiguriert ist, um eine Ausgabespannung der energieempfängerseitigen Phaseneinstellungsoszillationseinheit (28) an die Resonanzspule eines Energieempfängers (22) anzulegen und eine Resonanzfrequenz der Resonanzspule eines Energieempfängers (22) durch Einstellung der Dummylast als Last der Energieentnahmespule (23) anzupassen.

3. Energieempfänger (2) nach Anspruch 1 oder 2, wobei die energieempfängerseitige Steuereinheit (26) konfiguriert ist, nach Einstellung einer Resonanzfrequenz der Resonanzspule eines Energieempfängers (22) die energieempfängerseitige Phaseneinstellungsoszillationseinheit (28) anzuhalten und dafür zu sorgen, dass die Resonanzspule eines Energieempfängers (22) Energie von der Energiequelle (1) empfängt, und Energie von der Energiequelle (1) zu empfangen, indem sie die Lastvorrichtung (21) als Last der Energieentnahmespule (23) einstellt.

4. Energieempfänger (2) nach einem der Ansprüche 1 bis 3, ferner umfassend:
   eine energieempfängerseitige Feedbacksteuereinheit (244), konfiguriert um eine Phasendifferenzausgabe von der ersten Phasenvergleichseinheit (251) nach einem Zielwert zu steuern, wobei die energieempfängerseitige Feedbacksteuereinheit (244) konfiguriert ist, um eine Resonanzfrequenz der Resonanzspule eines Energieempfängers (22) durch Steuerung eines Kondensators mit variabler Kapazität (222) anzupassen, der an der Resonanzspule eines Energieempfängers (22) bereitgestellt ist.

5. Energieempfänger (2) nach Anspruch 4, ferner umfassend: eine Zielwerteinstellungseinheit (243), konfiguriert, um den Zielwert einzustellen, wobei die energieempfängerseitige Feedbacksteuereinheit (26) konfiguriert ist, um eine Ausgabe der Zielwerteinstellungseinheit (243) zu empfangen,
oder wobei der Zielwert durch die energieempfängerseitige Steuereinheit (26) ausgegeben wird, wobei die energieempfängerseitige Feedbacksteuereinheit (244) konfiguriert ist, um eine Ausgabe der energieempfängerseitigen Steuereinheit (26) zu empfangen.

6. Energieempfänger (2) nach einem der Ansprüche 1 bis 5, wobei die Anpassung der Resonanzfrequenz der Resonanzspule eines Energieempfängers (22) in vorbestimmten Intervallen wiederholt wird.

7. Energieempfänger (2) nach einem der Ansprüche 1 bis 6, ferner umfassend: einen ersten Temperatursensor (200), konfiguriert, um eine Temperatur der Resonanzspule eines Energieempfängers (22) zu messen, wobei die energieempfängerseitige Steuereinheit (26) konfiguriert ist, um die Steuerung durch Empfang eines ersten Temperatursignal von dem ersten Temperatursensor (200) auszuführen,
wobei vorzugsweise die energieempfängerseitige Steuereinheit (26) konfiguriert ist, um eine erste Temperatursignalausgabe von dem ersten Temperatursensor (200) über die energieempfängerseitige Kommunikationseinheit (27) an die Energiequelle (1) zu übermitteln.

8. Drahtloses Energieübertragungssystem, einschließlich mindestens einer Energiequelle (1) und mindestens eines Energieempfängers (2), wobei der Energieempfänger (2) ein Energieempfänger nach einem der Ansprüche 1 bis 7 ist.

9. Drahtloses Energieübertragungssystem nach Anspruch 8, wobei die Energiequelle (1) umfasst:

ein AC-Netzteil (11), konfiguriert, um eine Spannung auszugeben, die mit einer vorbestimmten Frequenz oszilliert;
eine Energieversorgungsspule (12), konfiguriert, um eine Ausgabespannung eines AC-Netzteils (11) zu empfangen;
eine Resonanzspule der Energiequelle (13), konfiguriert, um Energie von der Energieversorgungsspule (12) unter Verwendung von elektromagnetischer Induktion zu empfangen und drahtlos Energie an die Resonanzspule eines Energieempfängers (22) unter Verwendung einer Magnetfeldresonanz oder einer Resonanz eines elektrischen Felds zu übertragen; und
eine energiequellenseitige Kommunikationseinheit (17), konfiguriert, um mit der Energieempfänger (2) zu kommunizieren.

10. Drahtloses Energieübertragungssystem nach Anspruch 9, wobei die Energiequelle (1) ferner umfasst: eine energiequellenseitige Steuereinheit (16), konfiguriert, um eine Ausgabe von der energiequellenseitigen Kommunikationseinheit (17) zu empfangen und eine Resonanzfrequenz der Resonanzspule der Energiequelle (13) unter Verwendung einer Ausgabespannung des AC-Netzteils (11) anzupassen,
wobei vorzugsweise die energiequellenseitige Steuereinheit (16) konfiguriert ist, um eine Resonanzfrequenz der Resonanzspule der Energiequelle (13) durch Einstellung einer Ausgabespannung des AC-Netzteils (11) auf eine Spannung anzupassen, die geringer ist, als eine Spannung, bei der die Energie von der Energiequelle (1) an den Energieempfänger (2) übertragen wird,
wobei vorzugsweise die Anpassung einer Resonanzfrequenz der Resonanzspule der Energiequelle (13) durch die energiequellenseitige Steuereinheit (16) sofort vor der Anpassung einer Resonanzfrequenz der Resonanzspule eines Energieempfängers (13) durch die energieempfängerseitige Steuereinheit (16) erfolgt.

11. Drahtloses Energieübertragungssystem nach Anspruch 10, wobei die Resonanzfrequenz der Resonanzspule der Energiequelle (13), die durch die energiequellenseitige Steuereinheit (16) eingestellt wird, der Resonanzfrequenz der Resonanzspule eines Energieempfängers (22) entspricht, die durch die energieempfängerseitige Steuereinheit (26) eingestellt wird.

12. Drahtloses Energieübertragungssystem nach Anspruch 10 oder 11, wobei die Energiequelle (1) ferner umfasst: eine zweite Temperatursensor (100), konfiguriert, um eine Temperatur der Resonanzspule der Energiequelle (13) zu messen, wobei die energiequellenseitige Steuereinheit (16) konfiguriert ist, um die Steuerung durch Empfang eines zweiten Temperatursignals von dem zweiten Temperatursensor (100) durchzuführen,
wobei vorzugsweise die energiequellenseitige Steuereinheit (16) konfiguriert ist, um die Verarbeitung bei Auftreten einer ungewöhnlichen Temperatur durch Empfang eines ersten Temperatursignals von dem ersten Temperatursensor (100) des Energieempfängers (1) über die energieempfängerseitige Kommunikationseinheit (27) und die energiequellenseitige Kommunikationseinheit (17) zusammen mit einer zweiten Temperatursignalausgabe von dem zweiten Temperatursensor (100) durchzuführen.

13. Drahtloses Energieübertragungssystem nach einem der Ansprüche 8 bis 12, wobei die Energiequelle (1) ferner umfasst:

eine zweite Phasenvergleichseinheit (151), konfiguriert, um eine Phase einer Ausgabespannungsausgabe von dem AC-Netzteil (11) und eine Phase des Stroms, der in der Resonanzspule der Energiequelle (13) fließt, zu vergleichen; und
eine energiequellenseitige Feedbacksteuereinheit (144), konfiguriert, um eine Phasendifferenzausgabe einer zweiten Phasenvergleichseinheit (151) nach einem Zielwert zu steuern, wobei die energiequellenseitige Feedbacksteuereinheit (144) konfiguriert ist, um eine Resonanzfrequenz der Resonanzspule der Energiequelle (13) durch Steuerung eines Kondensators mit variabler Kapazität (132) anzupassen, der an der Resonanzspule der Energiequelle (13) bereitgestellt ist.

14. Drahtloses Übertragungsverfahren für den drahtlosen Empfang von Energie von einer Energiequelle (1) durch einen Energieempfänger (2) unter Verwendung einer Magnetfeldresonanz oder einer Resonanz eines elektrischen Felds, wobei eine energieempfängerseitige Phaseneinstellungsoszillationseinheit (28), die eine Spannung an den Energieempfänger (2) ausgibt, die mit einer vorbestimmten Frequenz oszilliert, bereitgestellt ist, und wobei eine Resonanzfrequenz des Energieempfängers (2) unter Verwendung einer Ausgabespannungsausgabe, die von der energieempfängerseitigen Phaseneinstellungsoszillationseinheit (28) ausgegeben wird, durch Vergleich einer Phase einer Ausgabespannung von der energieempfängerseitigen Phaseneinstellungsoszillationseinheit (28) und einer Phase des Stroms, der in der Resonanzspule eines Energieempfängers (22) fließt, ohne direkt die Phaseninformationsausgabe der Energiequelle (1) zu verwenden, angepasst wird.

15. Drahtloses Energieübertragungsverfahren nach Anspruch 14, wobei eine Resonanzfrequenz der Energiequelle (1) durch Einstellung einer Ausgabespannung eines AC-Netzteils (11) in der Energiequelle (1) auf eine Spannung angepasst wird, die geringer ist, als eine Spannung, bei der Energie von der Energiequelle (1) an den Energieempfänger (2) übertragen wird, und wobei die Resonanzfrequenz der Energiequelle (1) der Resonanzfrequenz des Energieempfängers (2) entspricht.

**Revendications**

1. Récepteur de puissance (2) comprenant :

une bobine de résonance de récepteur de puissance (22) configurée pour recevoir de la puissance sans fil à partir d'une source de puissance (1) en utilisant une résonance de champ magnétique ou une résonance de champ électrique ;
une unité d'oscillation d'ajustement de phase côté récepteur de puissance (28) configurée pour délivrer en sortie une tension qui oscille à une fréquence prédéterminée ;
une unité de communication côté récepteur de puissance (27) configurée pour communiquer avec la source de puissance (1) ;
une unité de commande côté récepteur de puissance (26) configurée pour recevoir une sortie en provenance de l'unité de communication côté récepteur de puissance (27), et pour ajuster une fréquence de résonance de la bobine de résonance de récepteur de puissance (22) en utilisant une tension de sortie provenant de l'unité d'oscillation d'ajustement de phase côté récepteur de puissance (28) ; et
une première unité de comparaison de phases (251) configurée pour comparer une phase d'une tension de sortie provenant de unité d'oscillation d'ajustement de phase côté récepteur de puissance (28) et une phase d'un courant circulant dans la bobine de résonance de récepteur de puissance (22), sans utiliser directement une sortie d'informations de phase provenant de la source de puissance (1) .

2. Récepteur de puissance (2) selon la revendication 1, comprenant en outre :

une bobine d'extraction de puissance (23) configurée pour recevoir de la puissance depuis la bobine de résonance de récepteur de puissance (22) en utilisant une induction électromagnétique ;
un dispositif de charge (21) configuré pour recevoir de la puissance extraite de la bobine d'extraction de puissance (23) ; et

une charge fictive (29) ayant une valeur de résistance équivalente au dispositif de charge (21),

dans lequel l'unité de commande côté récepteur de puissance (26) est configurée pour appliquer une tension de sortie de l'unité d'oscillation d'ajustement de phase côté récepteur de puissance (28) à la bobine de résonance de récepteur de puissance (22) et pour ajuster une fréquence de résonance de la bobine de résonance de récepteur de puissance (22) en établissant la charge fictive comme une charge de la bobine d'extraction de puissance (23).

**3.** Récepteur de puissance (2) selon la revendication 1 ou 2, dans lequel l'unité de commande côté récepteur de puissance (26) est configurée pour arrêter, après ajustement d'une fréquence de résonance de la bobine de résonance de récepteur de puissance (22), l'unité d'oscillation d'ajustement de phase côté récepteur de puissance (28) et amener la bobine de résonance de récepteur de puissance (22) à recevoir de la puissance depuis la source de puissance (1), et à recevoir de la puissance depuis la source de puissance (1) en établissant le dispositif de charge (21) comme une charge de la bobine d'extraction de puissance (23).

**4.** Récepteur de puissance (2) selon l'une quelconque des revendications 1 à 3, comprenant en outre :

une unité de commande de rétroaction côté récepteur de puissance (244) configurée pour commander une sortie de différence de phases provenant de la première unité de comparaison de phases (251) conformément à une valeur cible, l'unité de commande de rétroaction côté récepteur de puissance (244) étant configurée pour ajuster une fréquence de résonance de la bobine de résonance de récepteur de puissance (22) en commandant un condensateur à capacité variable (222) agencé au niveau de la bobine de résonance de récepteur de puissance (22).

**5.** Récepteur de puissance (2) selon la revendication 4, comprenant en outre : une unité d'établissement de valeur cible (243) configurée pour établir la valeur cible, dans lequel l'unité de commande de rétroaction côté récepteur de puissance (26) est configurée pour recevoir une sortie de l'unité d'établissement de valeur cible (243),

ou dans lequel la valeur cible est délivrée en sortie par l'unité de commande côté récepteur de puissance (26), l'unité de commande de rétroaction côté récepteur de puissance (244) étant configurée pour recevoir une sortie de l'unité de commande côté récepteur de puissance (26).

**6.** Récepteur de puissance (2) selon l'une quelconque des revendications 1 à 5, dans lequel l'ajustement de la fréquence de résonance de la bobine de résonance de récepteur de puissance (22) est répété à des intervalles prédéterminés.

**7.** Récepteur de puissance (2) selon l'une quelconque des revendications 1 à 6, comprenant en outre : un premier capteur de température (200) configuré pour mesurer une température de la bobine de résonance de récepteur de puissance (22), l'unité de commande côté récepteur de puissance (26) étant configurée pour effectuer une commande en recevant un premier signal de température provenant du premier capteur de température (200),

de préférence dans lequel l'unité de commande côté récepteur de puissance (26) est configurée pour transmettre, à la source de puissance (1) via l'unité de communication côté récepteur de puissance (27), un premier signal de température délivré en sortie par le premier capteur de température (200).

**8.** Système de transfert de puissance sans fil comprenant au moins une source de puissance (1) et au moins un récepteur de puissance (2), dans lequel le récepteur de puissance (2) est un récepteur de puissance selon l'une quelconque des revendications 1 à 7.

**9.** Système de transfert de puissance sans fil selon la revendication 8, dans lequel la source de puissance (1) comprend :

une alimentation de puissance en courant alternatif (11) configurée pour délivrer en sortie une tension qui oscille à une fréquence prédéterminée ;

une bobine d'alimentation de puissance (12) configurée pour recevoir une tension de sortie de l'alimentation de puissance en courant alternatif (11) ;

une bobine de résonance de source de puissance (13) configurée pour recevoir de la puissance depuis la bobine d'alimentation de puissance (12) en utilisant une induction électromagnétique, et transférer sans fil de la puissance à la bobine de résonance de récepteur de puissance (22) en utilisant une résonance de champ magnétique ou résonance de champ électrique ; et

une unité de communication côté source de puissance (17) configurée pour communiquer avec le récepteur de puissance (2).

**10.** Système de transfert de puissance sans fil selon la revendication 9, dans lequel la source de puissance (1) comprend en outre : une unité de commande côté source de puissance (16) configurée pour recevoir une sortie provenant de l'unité de communication côté source de puissance (17), et ajuster une fréquence de résonance de la bobine de résonance de source de puissance (13) en utilisant une tension de sortie de l'alimentation de puissance en courant alternatif (11),

de préférence dans lequel l'unité de commande côté source de puissance (16) est configurée pour ajuster une fréquence de résonance de la bobine de résonance de source de puissance (13) en établissant une tension de sortie de l'alimentation de puissance en courant alternatif (11) à une tension qui est inférieure à une tension à laquelle de la puissance est transférée de la source de puissance (1) au récepteur de puissance (2),

de préférence dans lequel l'ajustement d'une fréquence de résonance de la bobine de résonance de source de puissance (13) par l'unité de commande côté source de puissance (16) est effectué immédiatement avant l'ajustement d'une fréquence de résonance de la bobine de résonance de récepteur de puissance (13) par l'unité de commande côté récepteur de puissance (16).

11. Système de transfert de puissance sans fil selon la revendication 10, dans lequel la fréquence de résonance de la bobine de résonance de source de puissance (13), qui est ajustée par l'unité de commande côté source de puissance (16), est égale à la fréquence de résonance de la bobine de résonnance de récepteur de puissance (22), qui est ajustée par l'unité de commande côté récepteur de puissance (26).

12. Système de transfert de puissance sans fil selon la revendication 10 ou 11, dans lequel la source de puissance (1) comprend en outre : un second capteur de température (100) configuré pour mesurer une température de la bobine de résonance de source de puissance (13), dans lequel l'unité de commande côté source de puissance (16) est configurée pour effectuer une commande en recevant un second signal de température provenant du second capteur de température (100),

de préférence dans lequel l'unité de commande côté source de puissance (16) est configurée pour effectuer un traitement lors de l'apparition d'une température anormale en recevant un premier signal de température provenant du premier capteur de température (100) du récepteur de puissance (1) via l'unité de communication côté récepteur de puissance (27) et l'unité de communication côté source de puissance (17), ensemble avec un second signal de température délivré en sortie par le second capteur de température (100).

13. Système de transfert de puissance sans fil selon l'une quelconque des revendications 8 à 12, dans lequel la source de puissance (1) comprend en outre :

une seconde unité de comparaison de phases (151) configurée pour comparer une phase d'une tension de sortie délivrée en sortie par l'alimentation de puissance en courant alternatif (11) et une phase d'un courant circulant dans la bobine de résonance de source de puissance (13) ; et

une unité de commande de rétroaction côté source de puissance (144) configurée pour commander, conformément à une valeur cible, une sortie de différence de phases provenant de la seconde unité de comparaison de phases (151), l'unité de commande de rétroaction côté source de puissance (144) étant configurée pour ajuster une fréquence de résonance de la bobine de résonance de source de puissance (13) en commandant un condensateur à capacité variable (132) agencé au niveau de la bobine de résonance de source de puissance (13).

14. Procédé de transfert de puissance sans fil pour recevoir sans fil de la puissance provenant d'une source de puissance (1) par un récepteur de puissance (2) en utilisant une résonance de champ magnétique ou une résonance de champ électrique,

dans lequel est fournie une unité d'oscillation d'ajustement de phase côté récepteur de puissance (28) délivrant en sortie au récepteur de puissance (2) une tension qui oscille à une fréquence prédéterminée, et

dans lequel une fréquence de résonance du récepteur de puissance (2) est ajustée en utilisant une tension de sortie délivrée en sortie par l'unité d'oscillation d'ajustement de phase côté récepteur de puissance (28) en comparant une phase d'une tension de sortie provenant de l'unité d'oscillation d'ajustement de phase côté récepteur de puissance (28) et une phase d'un courant circulant dans la bobine de résonance de récepteur de puissance (22), sans utiliser directement une sortie d'informations de phase provenant de la source de puissance (1).

15. Procédé de transfert de puissance sans fil selon la revendication 14, dans lequel une fréquence de résonance de la source de puissance (1) est ajustée en établissant une tension de sortie d'une alimentation de puissance en courant alternatif (11) dans la source de puissance (1) à une tension inférieure à une tension à laquelle de la puissance est transférée de la source de puissance (1) au récepteur de puissance (2), et

dans lequel la fréquence de résonance de la source de puissance (1) est égale à la fréquence de résonance du récepteur de puissance (2).

# FIG. 1

# FIG. 2

EP 2 953 235 B1

FIG. 3

FIG. 4A

FIG. 4B

# FIG. 5A

# FIG. 5B

| COIL | OUTSIDE DIAMETER | TURN NUMBER | PITCH |
|---|---|---|---|
| POWER SUPPLY COIL 12 | φ30mm | 1 | − |
| POWER SOURCE RESONANCE CCOIL 13 | φ40mm | 5 | 0.8mm |
| POWER RECEIVER RESONANCE COIL 22 | φ30mm | 5 | 0.8mm |
| POWER EXTRACTION COIL 23 | φ20mm | 1 | − |

FIG. 6A

FIG. 6B

FIG. 7

# FIG. 8

EP 2 953 235 B1

FIG. 9

EP 2 953 235 B1

FIG. 10

F I G. 11

[POWER SUPPLY] [RESONANCE ADJUSTMENT] [POWER SUPPLY] [RESONANCE ADJUSTMENT] [POWER SUPPLY] [RESONANCE ADJUSTMENT] [POWER SUPPLY]

[OPERATING STATE]
[LOW-OUTPUT STATE]
[STOPPED STATE]
[OPERATING STATE]
[STOPPED STATE]
[OPERATING STATE]
[STOPPED STATE]

VA (Sps)
VB (Spj)
SW1 (CSj)
SW2 (/CSj)
SW3 (CSj)
SW4 (/CSj)
RL RECEIVED POWER
RL' RECEIVED POWER

Tps Tcs  Tcj  Tps  Tcs  Tcj  Tps  Tcs  Tcj Tps

## FIG. 12

<POWER SOURCE SIDE>

START — ST101

CONFIRM COMMUNICATION/RESPONSE

START RESONANCE ADJUSTMENT — ST102

OUTPUT VA FOR ADJUSTMENT — ST103

CONTROL PHASE DIFFERENCE — ST104

ST105 — IS PHASE DIFFERENCE WITHIN TARGET VALUE ? — NO

YES

END RESONANCE ADJUSTMENT — ST106

START POWER TRANSMISSION — ST107

OUTPUT VA FOR POWER TRANSMISSION — ST108

ST109 — HAS A PRESCRIBED TIME PASSED ? — NO

YES

<POWER RECEIVER SIDE>

ST201 — CONFIRM COMMUNICATION/RESPONSE

START RESONANCE ADJUSTMENT — ST202

SWITCH SW — ST203

OUTPUT VB — ST204

CONTROL PHASE DIFFERENCE — ST205

ST206 — IS PHASE DIFFERENCE WITHIN TARGET VALUE ? — NO

YES

SWITCH SW — ST207

STOP VB — ST208

TERMINATE RESONANCE ADJUSTMENT — ST209

# FIG. 13

FIG. 14

VA
(Sps)

VB
(Spj)

SW1
(CSj)

SW2
(/CSj)

SW3
(CSj)

SW4
(/CSj)

RL RECEIVED POWER

RL' RECEIVED POWER

TEMPERATURE SENSOR
(100, 200)

[POWER SUPPLY]
[OPERATING STATE]

[STOPPED STATE]

[STOPPED STATE]

[STOPPED STATE]

[OPERATING STATE]

[STOPPED STATE]
[RESONANCE ADJUSTMENT]
[POWER SUPPLY]
[LOW-OUTPUT STATE]

[STOPPED STATE]

[STOPPED STATE]

Thb

Tha

Tps

Tst

Tcj

Tcs

# FIG. 15

<POWER SOURCE SIDE>

START — ST101

CONFIRM COMMUNICATION/RESPONSE — ST102

START RESONANCE ADJUSTMENT — ST103

OUTPUT VA FOR ADJUSTMENT

CONTROL PHASE DIFFERENCE

ST105 / ST104 — IS PHASE DIFFERENCE WITHIN TARGET VALUE? — NO

YES — ST106 — END RESONANCE ADJUSTMENT

ST107 — START POWER TRANSMISSION

ST108 — OUTPUT VA FOR POWER TRANSMISSION

MONITOR POWER TRANSMITTING/ RECEIVING TEMPERATURE

ST111 / ST110 — DOES POWER SOURCE OR RECEIVER SIDE TEMPERATURE SENSOR DETECT ABNORMALITY? — NO

YES — ST112 — STOP VA FOR POWER TRANSMISSION

MONITOR POWER TRANSMITTING/ RECEIVING TEMPERATURE

ST114 / ST113 — DO POWER SOURCE SIDE AND POWER RECEIVER SIDE TEMPERATURE SENSORS DETECT NORMAL VALUES? — NO

YES

<POWER RECEIVER SIDE>

ST201 — CONFIRM COMMUNICATION/RESPONSE

ST202 — START RESONANCE ADJUSTMENT

ST203 — SWITCH SW

ST204 — OUTPUT VB

CONTROL PHASE DIFFERENCE

ST206 / ST205 — IS PHASE DIFFERENCE WITHIN TARGET VALUE? — NO

YES — ST207 — SWITCH SW

ST208 — STOP VB

ST209 — TERMINATE RESONANCE ADJUSTMENT

ST210 — DOES POWER RECEIVER SIDE TEMPERATURE SENSOR DETECT ABNORMAL VALUE? — NO

YES — ST211 — TRANSMIT ABNORMALITY DETECTION

ST212 / ST213 — DOES POWER RECEIVER SIDE TEMPERATURE SENSOR DETECT NORMAL VALUE? — NO

YES — TRANSMIT NORMALIZATION DETECTION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011099071 A
- US 2010148174 A
- US 2012235508 A
- EP 2536002 A